# EUROPEAN PATENT APPLICATION

(11) **EP 4 625 866 A1**
(43) Date of publication of application: **01.10.2025**
(21) Application number: 23910596.8
(22) Date of filing: 26.12.2023
(51) Int. Cl.: H04L 5/00

(54) **COMMUNICATION METHOD AND COMMUNICATION APPARATUS**

(30) Priority: 27.12.2022 CN 202211685531
(71) Applicant: Huawei Technologies Co., Ltd., Shenzhen, Guangdong 518129 (CN)
(72) Inventor: LI, Xinxian, Shenzhen, Guangdong 518129 (CN); PENG, Jinlin, Shenzhen, Guangdong 518129 (CN); DAI, Xizeng, Shenzhen, Guangdong 518129 (CN); FAN, Ming, Shenzhen, Guangdong 518129 (CN)
(74) Representative: Pfenning, Meinig & Partner mbB
(86) International application number: PCT/CN2023/141931
(87) International publication number: WO 2024/140673

(57) **Abstract**

This application discloses a communication method and a communication apparatus. The method includes: A terminal device sends capability information to a network device, where the capability information includes a plurality of first frequency band combinations, the capability information indicates that a cell corresponding to a first frequency band included in the first frequency band combination supports being configured as a first cell, or the capability information indicates whether the cell corresponding to the first frequency band included in the first frequency band combination supports being configured as the first cell, and when the first cell is configured for the terminal device, the terminal device is incapable of using a downlink carrier of the first cell for communication. The terminal device receives radio resource control RRC signaling sent by the network device, where the RRC signaling indicates a second frequency band combination configured for the terminal device, the second frequency band combination includes the first cell, and the second frequency band combination is one of the plurality of first frequency band combinations. Based on the method described in this application, impact on downlink communication due to a distorted signal generated through carrier aggregation on an uplink frequency band is avoided.

## Description

This application claims priority to Chinese Patent Application No. 202211685531.X, filed with the China National Intellectual Property Administration on December 27, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

With development of the times, users have increasingly high requirements on a communication rate. Carrier aggregation (Carrier aggregation, CA) means that a plurality of contiguous or non-contiguous component carriers or frequency bands in frequency domain are aggregated for a terminal device for data transmission. However, when a spacing between CA frequency bands used by the terminal device to perform uplink communication is small, intermodulation distortion (Intermodulation Distortion, IMD) or harmonic distortion may occur. The IMD is used as an example below for description. It is assumed that CA frequency bands configured by a network device for the terminal device for uplink communication are 800 MHz and 900 MHz. Because a distorted signal of an additional frequency component, that is, 700 MHz (800*2-900), is generated due to third-order intermodulation, if a frequency band configured by the network device for the terminal device for downlink communication is 700 MHz, the third-order intermodulation corresponding to the uplink frequency band of 800 MHz and the uplink frequency band of 900 MHz affects signal receiving corresponding to the downlink frequency band of 700 MHz. How to avoid affecting downlink communication is an urgent problem to be resolved.

### SUMMARY

This application provides a communication method and a communication apparatus, to help avoid impact on downlink communication due to a distorted signal generated through carrier aggregation on an uplink frequency band.

According to a first aspect, this application provides a communication method. The method includes: A terminal device sends capability information to a network device, where the capability information includes a plurality of first frequency band combinations, the first frequency band combination includes at least two frequency bands, the capability information indicates that a cell corresponding to a first frequency band included in the first frequency band combination supports being configured as a first cell, or the capability information indicates whether the cell corresponding to the first frequency band included in the first frequency band combination supports being configured as the first cell, and when the first cell is configured for the terminal device, the terminal device is incapable of using a downlink carrier of the first cell for communication. The terminal device receives radio resource control RRC signaling sent by the network device, where the RRC signaling indicates a second frequency band combination configured for the terminal device, the second frequency band combination includes the first cell, and the second frequency band combination is one of the plurality of first frequency band combinations.

Based on the method described in the first aspect, the network device may properly configure the first cell for the terminal device based on the capability information of the terminal device. For example, assuming that a frequency component of the first frequency band in the first frequency band combination is the same as a frequency component of a distorted signal generated through aggregation of at least two frequency bands other than the first frequency band in the first frequency band combination, the network device configures the cell corresponding to the first frequency band as the first cell. Therefore, the network device properly configures the first cell, to avoid affecting, due to concurrent transmission on at least two uplink frequency bands, receiver sensitivity on a downlink frequency band that is operating simultaneously. To be specific, because a cell corresponding to a downlink carrier affected by a distorted signal generated through aggregation of carriers corresponding to a plurality of uplink frequency bands is configured as the first cell, the terminal device does not use the downlink carrier of the first cell, to help avoid affecting downlink receiving.

In a possible implementation, that the capability information indicates that the cell corresponding to the first frequency band included in the first frequency band combination supports being configured as the first cell is specifically: The capability information indicates that the cell corresponding to the first frequency band supports being configured as one of the first cell and a second cell, and when the second cell is configured for the terminal device, the terminal device is capable of using a downlink carrier of the second cell for communication. Based on this implementation, the network device can flexibly determine whether a cell needs to be configured for the terminal device as the first cell.

In a possible implementation, that the capability information indicates whether the cell corresponding to the first frequency band included in the first frequency band combination supports being configured as the first cell is specifically: The capability information indicates that the cell corresponding to the first frequency band included in the first frequency band combination supports being configured only as the first cell, or the cell corresponding to the first frequency band supports being configured only as a second cell, and when the second cell is configured for the terminal device, the terminal device is capable of using a downlink carrier of the second cell for communication.

In a possible implementation, the RRC signaling further includes cell configuration information, and the cell configuration information indicates one or more of the following information: synchronous timing information of the first cell, downlink control information DCI blind detection information, and a first cell index, where a cell corresponding to the first cell index belongs to the second cell. The method further includes: The terminal device receives, based on the DCI blind detection information by using a downlink carrier of the cell corresponding to the first cell index, DCI that is from the network device and that is used to schedule an uplink carrier of the first cell.

In a possible implementation, the cell configuration information indicates a second cell index and/or a timing offset between a cell corresponding to the second cell index and the first cell, or the cell configuration information indicates that the synchronous timing information of the first cell is the same as synchronous timing information of a primary cell, and the cell corresponding to the second cell index belongs to the second cell. Based on this implementation, the terminal device can obtain downlink timing information of the first cell through another cell.

According to a second aspect, this application provides a communication method. The method includes: A network device receives capability information from a terminal device, where the capability information includes a plurality of first frequency band combinations, the first frequency band combination includes at least two frequency bands, the capability information indicates that a cell corresponding to a first frequency band included in the first frequency band combination supports being configured as a first cell, or the capability information indicates whether the cell corresponding to the first frequency band included in the first frequency band combination supports being configured as the first cell, and when the first cell is configured for the terminal device, the terminal device is incapable of using a downlink carrier of the first cell for communication. The network device sends radio resource control RRC signaling to the terminal device, where the RRC signaling indicates a second frequency band combination configured for the terminal device, the second frequency band combination includes the first cell, and the second frequency band combination is one of the plurality of first frequency band combinations. For beneficial effects corresponding to the method described in the second aspect and the possible implementations of the second aspect, refer to the descriptions of the first aspect. Details are not described herein again.

In a possible implementation, that the capability information indicates that the cell corresponding to the first frequency band included in the first frequency band combination supports being configured as the first cell is specifically: The capability information indicates that the cell corresponding to the first frequency band included in the first frequency band combination supports being configured as one of the first cell and a second cell, and when the second cell is configured for the terminal device, the terminal device is capable of using a downlink carrier of the second cell for communication.

In a possible implementation, that the capability information indicates whether the cell corresponding to the first frequency band included in the first frequency band combination supports being configured as the first cell is specifically: The capability information indicates that the cell corresponding to the first frequency band supports being configured only as the first cell, or the cell corresponding to the first frequency band supports being configured only as a second cell, and when the second cell is configured for the terminal device, the terminal device is capable of using a downlink carrier of the second cell for communication.

In a possible implementation, the RRC signaling further includes cell configuration information, and the cell configuration information indicates one or more of the following information: synchronous timing information of the first cell, downlink control information DCI blind detection information, and a first cell index, where a cell corresponding to the first cell index belongs to the second cell. The method further includes: The network device sends, to the terminal device based on the DCI blind detection information by using a downlink carrier of the cell corresponding to the first cell index, DCI used to schedule an uplink carrier of the first cell.

In a possible implementation, the cell configuration information indicates a second cell index and/or a timing offset between a cell corresponding to the second cell index and the first cell, or the cell configuration information indicates that the synchronous timing information of the first cell is the same as synchronous timing information of a primary cell, and the cell corresponding to the second cell index belongs to the second cell. Based on this implementation, the terminal device can obtain downlink timing information of the first cell through another cell.

According to a third aspect, this application provides a communication method. The method includes: A terminal device sends capability information to a network device, where the capability information indicates a plurality of frequency band groups, the frequency band group includes at least one frequency band, each of the plurality of frequency band groups supports half-duplex communication and/or full-duplex communication, a frequency band in a first frequency band group is different from a frequency band in a second frequency band group, a combination of the first frequency band group and the second frequency band group supports full-duplex communication, the first frequency band group is one of the plurality of frequency band groups, and the second frequency band group is a frequency band group other than the first frequency band group in the plurality of frequency band groups. The terminal device receives downlink control information DCI from the network device, where the DCI indicates to send information on a first uplink carrier and/or indicates to receive information on a first downlink carrier, the first uplink carrier is a carrier in the first frequency band group, and the first downlink carrier is a carrier in the second frequency band group.

Based on the method described in the third aspect, uplink and downlink decoupling can be enabled according to a duplex rule of the frequency band group. In proper uplink and downlink independent configurations, impact of IMD or harmonic distortion caused by concurrency of a plurality of uplink frequency bands on receiver sensitivity of the terminal device that is operating on a downlink frequency band is avoided.

In a possible implementation, a frequency component of a distorted signal generated through aggregation of at least two carriers in the first frequency band group is different from a frequency component of a carrier in the second frequency band group. Based on this implementation, it can be avoided that when the network device schedules an uplink carrier and a downlink carrier, the frequency component of the distorted signal generated through uplink carrier aggregation is the same as a frequency component corresponding to the downlink carrier, thereby avoiding impact of the distorted signal generated through uplink carrier aggregation on signal receiving by the terminal device by using the downlink carrier.

According to a fourth aspect, this application provides a communication method. The method includes: A network device receives capability information from a terminal device, where the capability information indicates a plurality of frequency band groups, the frequency band group includes at least one frequency band, each of the plurality of frequency band groups supports half-duplex communication and/or full-duplex communication, a frequency band in a first frequency band group is different from a frequency band in a second frequency band group, a combination of the first frequency band group and the second frequency band group supports full-duplex communication, the first frequency band group is one of the plurality of frequency band groups, and the second frequency band group is a frequency band group other than the first frequency band group in the plurality of frequency band groups. The network device sends downlink control information DCI to the terminal device based on the capability information, where the DCI indicates the terminal device to send information on a first uplink carrier and/or indicates the terminal device to receive information on a first downlink carrier, the first uplink carrier is a carrier in the first frequency band group, and the first downlink carrier is a carrier in the second frequency band group. For beneficial effects corresponding to the method described in the fourth aspect and the possible implementations of the fourth aspect, refer to the descriptions of the third aspect. Details are not described herein again.

In a possible implementation, a frequency component of a distorted signal generated through aggregation of at least two carriers in the first frequency band group is different from a frequency component of a carrier in the second frequency band group.

According to a fifth aspect, this application provides a communication method. The method includes: A terminal device receives first information sent by a network device, where the first information indicates to activate or deactivate a downlink carrier or an uplink carrier of a first secondary cell. The terminal device receives, on a first downlink carrier, downlink data information or control information sent by the network device, where when the first information indicates to deactivate the downlink carrier of the first secondary cell, the first downlink carrier does not include the downlink carrier of the first secondary cell.

Based on the method described in the fifth aspect, when a frequency component of a distorted signal generated through aggregation of at least two uplink carriers in a plurality of uplink carriers activated by the terminal device is the same as a frequency component of the downlink carrier corresponding to the first secondary cell, the network device may indicate, by using the first information, to deactivate the downlink carrier corresponding to the first secondary cell, to avoid affecting downlink receiving.

In a possible implementation, the method further includes: The terminal device receives radio resource control RRC signaling sent by the network device, where the RRC signaling indicates configuration information of the first secondary cell, the configuration information of the first secondary cell includes configuration information of a plurality of downlink bandwidth parts BWPs, the configuration information of the plurality of downlink BWPs includes configuration information of a first downlink BWP, and the configuration information of the first downlink BWP indicates to deactivate the downlink carrier of the first secondary cell on the first downlink BWP. That the first information indicates to deactivate the downlink carrier of the first secondary cell is specifically: The first information indicates to switch a downlink BWP of the first secondary cell to the first downlink BWP.

According to a sixth aspect, this application provides a communication method. The method includes: A network device sends first information to a terminal device, where the first information indicates to activate or deactivate a downlink carrier or an uplink carrier of a first secondary cell. The network device sends, by using a first downlink carrier, downlink data information or control information to the terminal device, where when the first information indicates to deactivate the downlink carrier of the first secondary cell, the first downlink carrier does not include the downlink carrier of the first secondary cell. For beneficial effects corresponding to the method described in the sixth aspect and the possible implementations of the sixth aspect, refer to the descriptions of the fifth aspect. Details are not described herein again.

In a possible implementation, the method further includes: The network device sends radio resource control RRC signaling to the terminal device, where the RRC signaling indicates configuration information of the first secondary cell, the configuration information of the first secondary cell includes configuration information of a plurality of downlink bandwidth parts BWPs, the configuration information of the plurality of downlink BWPs includes configuration information of a first downlink BWP, and the configuration information of the first downlink BWP indicates to correspondingly deactivate the downlink carrier of the first secondary cell on the first downlink BWP. That the first information indicates to deactivate the downlink carrier of the first secondary cell is specifically: The first information indicates to switch a downlink BWP of the first secondary cell to the first downlink BWP.

According to a seventh aspect, this application provides a communication method. The method includes: A terminal device sends capability information to a network device, where the capability information indicates a first frequency band combination, the first frequency band combination corresponds to at least one operating mode, the operating mode includes an uplink carrier corresponding to a first frequency band and/or a downlink carrier corresponding to a second frequency band, and the first frequency band and the second frequency band each are a frequency band in the first frequency band combination. The terminal device receives first information sent by the network device, where the first information indicates a first operating mode, and the first operating mode is one of the at least one operating mode. The terminal device receives downlink control information DCI sent by the network device, where the DCI indicates the terminal device to send information on a first uplink carrier and/or indicates the terminal to receive information on a first downlink carrier, the first uplink carrier belongs to the uplink carrier corresponding to the first frequency band in the first operating mode, and the first downlink carrier belongs to the downlink carrier corresponding to the second frequency band in the first operating mode.

In a possible implementation, the at least one operating mode is predefined based on the first frequency band combination. Based on this implementation, the terminal device and the network device do not need to determine each operating mode, to save time and reduce network overheads.

In a possible implementation, before the terminal device receives the first information sent by the network device, the method further includes: The terminal device receives radio resource control RRC signaling sent by the network device, where the RRC signaling indicates the at least one operating mode. Based on this implementation, the network device can flexibly determine an operating mode corresponding to the first frequency band combination.

In a possible implementation, the capability information includes the at least one operating mode. Based on this implementation, the terminal device can flexibly determine an operating mode supported by the terminal device.

In a possible implementation, a frequency component of a distorted signal generated through aggregation of at least two uplink carriers corresponding to the first frequency band is different from a frequency component of the downlink carrier corresponding to the second frequency band. Based on this implementation, the terminal device operates in a proper operating mode, so that uplink and downlink decoupling can be implemented to some extent, to avoid a case in which the frequency component of the distorted signal generated through aggregation of the at least two uplink carriers corresponding to the first frequency band is the same as the frequency component of the downlink carrier corresponding to the second frequency band, so as to help avoid impact of the distorted signal generated through aggregation of the at least two uplink carriers corresponding to the first frequency band on signal receiving by the terminal device by using the downlink carrier corresponding to the second frequency band.

According to an eighth aspect, this application provides a communication method. The method includes: A network device receives capability information sent by a terminal device, where the capability information indicates a first frequency band combination, the first frequency band combination corresponds to at least one operating mode, the operating mode includes an uplink carrier corresponding to a first frequency band and/or a downlink carrier corresponding to a second frequency band, and the first frequency band and the second frequency band each are a frequency band in the first frequency band combination. The network device sends first information to the terminal device, where the first information indicates a first operating mode, and the first operating mode is one of the at least one operating mode. The network device sends downlink control information DCI to the terminal device, where the DCI indicates the terminal device to send information on a first uplink carrier and/or indicates the terminal to receive information on a first downlink carrier, the first uplink carrier belongs to the uplink carrier corresponding to the first frequency band in the first operating mode, and the first downlink carrier belongs to the downlink carrier corresponding to the second frequency band in the first operating mode.

In a possible implementation, the at least one operating mode is predefined based on the first frequency band combination.

In a possible implementation, before the network device sends the downlink control information DCI to the terminal device, the method further includes: The network device determines the at least one operating mode based on the first frequency band combination; and the network device sends radio resource control RRC signaling to the terminal device, where the RRC signaling indicates the at least one operating mode.

In a possible implementation, the capability information includes the at least one operating mode.

In a possible implementation, a frequency component of a distorted signal generated through aggregation of at least two uplink carriers corresponding to the first frequency band is different from a frequency component of the downlink carrier corresponding to the second frequency band. For beneficial effects corresponding to the method described in the eighth aspect and the possible implementations of the eighth aspect, refer to the descriptions of the seventh aspect. Details are not described herein again.

According to a ninth aspect, this application provides a communication apparatus. The apparatus may be a terminal device, or may be a module that may be used in the terminal device. The communication apparatus may alternatively be a chip system. The communication apparatus may perform the methods according to the first aspect, the third aspect, the fifth aspect, and the seventh aspect and any one of the possible implementations thereof. A function of the communication apparatus may be implemented by hardware, or may be implemented by hardware executing corresponding software. The hardware or software includes one or more units or modules corresponding to the foregoing function. The unit or module may be software and/or hardware. For operations performed by the communication apparatus and beneficial effects, refer to the beneficial effects corresponding to the methods according to the first aspect, the third aspect, the fifth aspect, and the seventh aspect and the possible implementations thereof.

According to a tenth aspect, this application provides a communication apparatus. The apparatus may be a network device, or may be a module that may be used in the network device. The communication apparatus may alternatively be a chip system. The communication apparatus may perform the methods according to the second aspect, the fourth aspect, the sixth aspect, and the eighth aspect and any one of the possible implementations thereof. A function of the communication apparatus may be implemented by hardware, or may be implemented by hardware executing corresponding software. The hardware or software includes one or more units or modules corresponding to the foregoing function. The unit or module may be software and/or hardware. For operations performed by the communication apparatus and beneficial effects, refer to the beneficial effects corresponding to the methods according to the second aspect, the fourth aspect, the sixth aspect, and the eighth aspect and the possible implementations thereof.

According to an eleventh aspect, this application provides a communication apparatus. The communication apparatus includes a processor, and when the processor invokes a computer program in a memory, the methods according to the first aspect to the eighth aspect and the possible implementations thereof are performed.

According to a twelfth aspect, this application provides a communication apparatus. The communication apparatus includes a processor and a memory, the processor is coupled to the memory, and the processor is configured to implement the methods according to the first aspect to the eighth aspect and the possible implementations thereof.

According to a thirteenth aspect, this application provides a communication apparatus. The communication apparatus includes a processor and a communication interface. The communication interface is configured to receive a signal from a communication apparatus other than the communication apparatus and transmit the signal to the processor, or send a signal from the processor to the communication apparatus other than the communication apparatus. The processor is configured to implement the methods according to the first aspect to the eighth aspect and the possible implementations thereof by using a logic circuit or by executing code instructions.

According to a fourteenth aspect, this application provides a chip, including a processor and a communication interface. The communication interface is configured to receive or output a signal, and the processor is configured to run a program, to enable the chip to be configured to implement the methods according to the first aspect to the eighth aspect and the possible implementations thereof.

According to a fifteenth aspect, this application provides a computer-readable storage medium. The storage medium stores a computer program or instructions, and when the computer program or the instructions are executed by a communication apparatus, the methods according to the first aspect to the eighth aspect and the possible implementations thereof are implemented.

### BRIEF DESCRIPTION OF DRAWINGS

FIG. 1 is a diagram of an architecture of a communication system according to an embodiment of this application;
FIG. 2 is a diagram of carrier aggregation according to an embodiment of this application;
FIG. 3 is a schematic flowchart of a communication method according to an embodiment of this application;
FIG. 4 is a diagram of a configuration of a first cell according to an embodiment of this application;
FIG. 5 is a schematic flowchart of another communication method according to an embodiment of this application;
FIG. 6 is a diagram of an operating manner of a frequency band group according to an embodiment of this application;
FIG. 7 is a schematic flowchart of another communication method according to an embodiment of this application;
FIG. 8 is a diagram of deactivating a downlink carrier according to an embodiment of this application;
FIG. 9 is a schematic flowchart of another communication method according to an embodiment of this application;
FIG. 10 is a diagram of dividing an operating mode according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of a chip according to an embodiment of this application.

### DESCRIPTION OF EMBODIMENTS

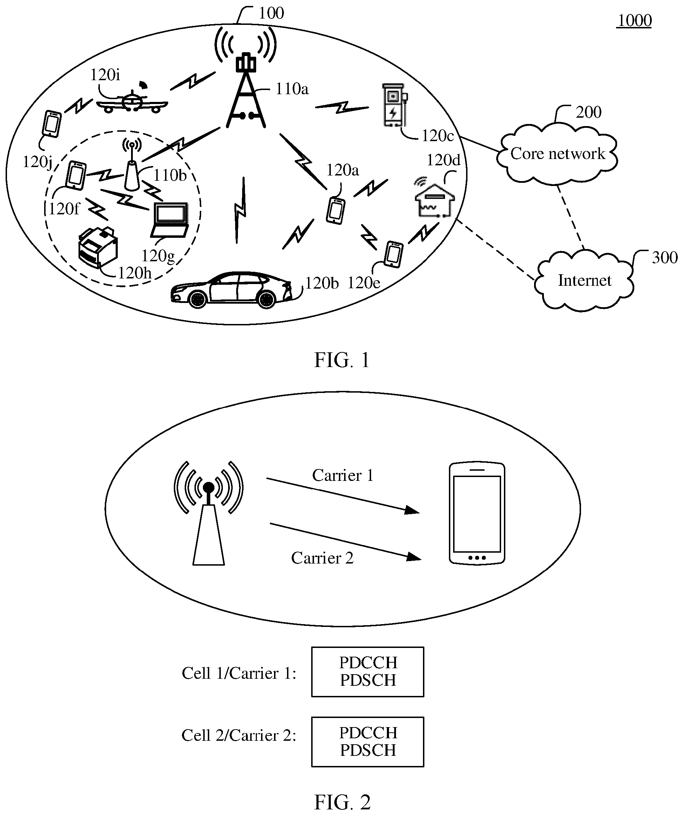

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is only a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), may be a micro base station or an indoor base station (for example, 110b in FIG. 1), or may be a relay node, a donor node, or the like. A specific technology and a specific device form that are used by the radio access network device are not limited in embodiments of this application. For ease of description, the network device is used as an abbreviation of the radio access network device, and the base station is used as an example of the radio access network device.

A terminal device is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between the base station and the base station, or between the terminal and the terminal may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. The function of the terminal may be performed by a module (for example, a chip or a modem) in the terminal, or may be performed by an apparatus including the function of the terminal.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

To better understand embodiments of this application, the following first describes related concepts in embodiments of this application.

### 1. Carrier aggregation (carrier aggregation, CA)

The CA means to aggregate a plurality of contiguous or non-contiguous component carriers or frequency bands in frequency domain into a larger bandwidth for a terminal device for data transmission. Each carrier or frequency band may also be referred to as a component carrier (component carrier, CC), a serving cell, or a cell. A primary cell may also be referred to as a primary serving cell (primary cell/primary serving cell, PCell), and is a cell on which a CA terminal device camps. A secondary cell (secondary cell, SCell) is a cell configured for the CA terminal device by using radio resource control (radio resource control, RRC) signaling, operates on a secondary component carrier (secondary component carrier, SCC), and may provide more radio resources for the CA terminal device. Each cell has respective physical downlink control channel (physical downlink control channel, PDCCH) or downlink control information (Downlink Control Information, DCI) for scheduling respective physical downlink shared channel (physical downlink shared channel, PDSCH) for data transmission. As shown in FIG. 2, for carrier aggregation of two cells, within one time unit, each cell has one PDCCH or one piece of DCI for scheduling a PDSCH for transmission. In other words, one terminal device needs to simultaneously monitor two PDCCHs or two pieces of DCI, and PDSCHs scheduled on the two cells may be simultaneously used for transmission.

If the terminal device supports uplink CA, a network device simultaneously configures a plurality of uplink frequency bands for the terminal device based on capability reporting information of the terminal device. Uplink carriers corresponding to frequency bands that support the uplink CA may be simultaneously used for communication. In the current R16 and R17, the network device may simultaneously configure two frequency bands for the terminal device. For example, assuming that the network device simultaneously configures, for the terminal device, cells corresponding to two frequency bands of 800 MHz and 900 MHz, and the terminal device supports an uplink CA frequency band combination of 800 MHz and 900 MHz, the terminal device may simultaneously transmit a PUSCH and other uplink information, signals, or channels on two uplink carriers corresponding to the frequency bands of 800 MHz and 900 MHz.

### 2. Intermodulation distortion (Intermodulation Distortion, IMD):

The IMD is distortion of a sum of input signals and distortion of a difference between the input signals, where the distortion is introduced by an amplifier. When two single-frequency signals are added to a same non-linear amplifier, the two signals are intermodulated due to a non-linear effect. Some output powers of new frequencies are referred to as intermodulated components. For example, after mixed signals whose frequencies are 1 kHz and 5 kHz are input to the amplifier, a distorted signal of 6 kHz (a sum of 1 kHz and 5 kHz) and a distorted signal of 4 kHz (a difference between 1 kHz and 5 kHz) are generated.

### 3. Harmonic:

Harmonics are sine waves. Each harmonic has a different frequency, amplitude and phase angle. A harmonic frequency is an integer multiple of a fundamental frequency. According to the analysis principle of the French mathematician M. Fourier, any repeated waveform can be decomposed into a component sine wave containing the fundamental frequency and a series of harmonics that are multiples of a fundamental wave. Based on different harmonic frequencies, harmonics can be divided into odd, even, and fractional harmonics. Harmonic distortion means that when a signal source passes through a power amplifier, an output signal has extra harmonic components than an input signal due to non-linear elements. The harmonic distortion is caused by non-linear systems.

### 4. Frequency band:

The frequency band is a frequency range, and one frequency band may include one or more carriers. For example, one frequency band may be one frequency band obtained through division in a 3GPP protocol, for example, n1, n2, n41, or n78. n1, n2, n41, n78, and the like may be understood as identifiers of frequency bands. Each of the frequency bands corresponds to a preset frequency range. For example, a frequency range of a frequency band identified by n41 includes 2496 MHz to 2690 MHz, and an uplink frequency range is used as an example herein.

When a spacing between CA frequency bands used by the terminal device to perform uplink communication is small, the IMD or the harmonic distortion may occur. The IMD is used as an example. It is assumed that CA frequency bands configured by a network device for the terminal device for uplink communication are 800 MHz and 900 MHz. Because a distorted signal of an additional frequency component, that is, 700 MHz (800*2-900), is generated due to third-order intermodulation, if a frequency band configured by the network device for the terminal device for downlink communication is 700 MHz, the third-order intermodulation corresponding to the uplink frequency band of 800 MHz and the uplink frequency band of 900 MHz affects signal receiving corresponding to the downlink frequency band of 700 MHz. How to avoid affecting downlink communication is an urgent problem to be resolved.

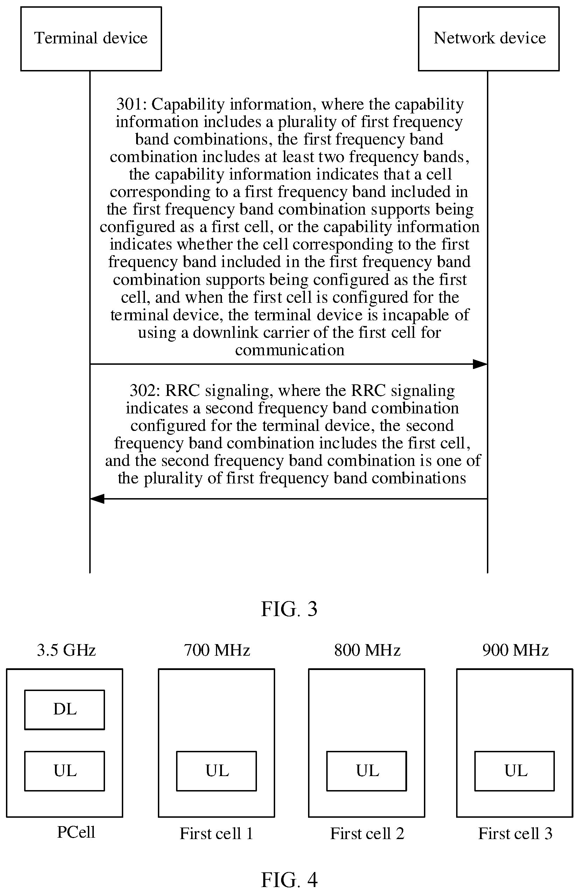

To avoid affecting downlink communication, an embodiment of this application provides a communication method. As shown in FIG. 3, the communication method includes step 301 and step 302. The method shown in FIG. 3 may be performed by a terminal device and a network device, or may be performed by a chip in the terminal device and a chip in the network device. In FIG. 3, an example in which the method is performed by the terminal device and the network device is used for description.

301: The terminal device sends capability information to the network device, and correspondingly, the network device receives the capability information sent by the terminal device. The capability information includes a plurality of first frequency band combinations, the first frequency band combination includes at least two frequency bands, the capability information indicates that a cell corresponding to a first frequency band included in the first frequency band combination supports being configured as a first cell, or the capability information indicates whether the cell corresponding to the first frequency band included in the first frequency band combination supports being configured as the first cell, and when the first cell is configured for the terminal device, the terminal device is incapable of using a downlink carrier of the first cell for communication.

In this embodiment of this application, the terminal device reports the first frequency band combination by using the capability information, and the terminal device supports concurrent transmission on the at least two frequency bands included in the first frequency band combination. The first frequency band is a frequency band that is in the first frequency band combination and that supports being configured as the first cell. When an SCell is configured for the terminal device as the first cell, the terminal device cannot use a downlink carrier of the SCell for communication. It should be additionally noted that, when an SCell is configured for the terminal device, if the SCell is not configured as the first cell and supports the terminal device in using a downlink carrier, the terminal device may perform communication by using the downlink carrier of the SCell. For example, assuming that when a cell is configured for a first terminal device as the first cell, the first terminal device cannot use a downlink carrier of the cell. When a cell is configured for a second terminal device as a second cell, the second cell supports the terminal device in using a downlink carrier. Therefore, the second terminal device can use the downlink carrier of the cell for communication. Based on the method, the network device may properly configure the first cell for the terminal device based on the capability information of the terminal device. For example, assuming that a frequency component of the first frequency band in the first frequency band combination is the same as a frequency component of a distorted signal generated through aggregation of at least two frequency bands other than the first frequency band in the first frequency band combination, the network device configures the cell corresponding to the first frequency band as the first cell. Therefore, the network device properly configures the first cell, to help avoid affecting, due to concurrent transmission on at least two uplink (uplink, UL) frequency bands, receiver sensitivity on a downlink (downlink, DL) frequency band that is operating simultaneously. To be specific, because a cell corresponding to a downlink carrier affected by a distorted signal generated through aggregation of carriers corresponding to a plurality of uplink frequency bands is configured as the first cell, the terminal device does not use the downlink carrier of the first cell, to help avoid affecting downlink receiving.

For example, as shown in FIG. 4, a cell corresponding to a frequency band of 3.5 GHz is a PCell, and the terminal device may use uplink and downlink carriers of the PCell. Cells corresponding to a frequency band of 700 MHz, a frequency band of 800 MHz, and a frequency band of 900 MHz are configured as first cells, which are respectively a first cell 1, a first cell 2, and a first cell 3. The terminal device may use only uplink carriers of the first cells. When the uplink 700 MHz, 800 MHz, and 900 MHz are used for concurrent transmission, IMD and harmonic distortion caused by the concurrent transmission do not affect downlink receiving on 700 MHz. Therefore, this implementation helps avoid affecting downlink receiving due to uplink concurrency.

In a possible implementation, that the capability information indicates that the cell corresponding to the first frequency band included in the first frequency band combination supports being configured as the first cell is specifically: The capability information indicates that the cell corresponding to the first frequency band supports being configured as one of the first cell and a second cell, and when the second cell is configured for the terminal device, the terminal device is capable of using a downlink carrier of the second cell for communication. Optionally, related signaling may be added to BandCombination included in the capability information for implementation. Specific signaling may be represented as follows:

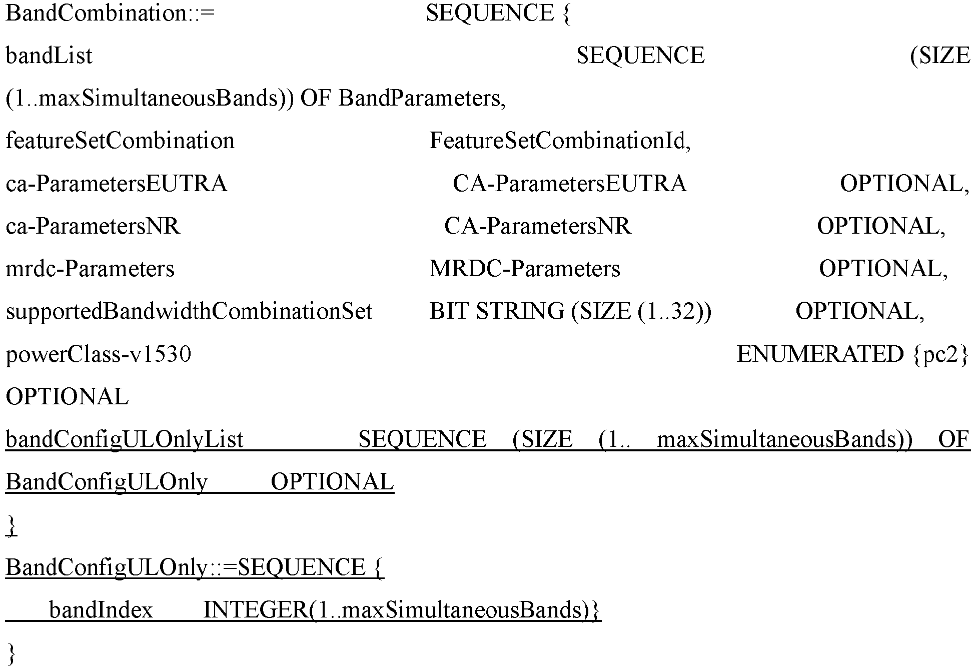

The underlined part is the added signaling, bandConfigULOnlyList indicates a frequency band set that supports being configured as first cells, BandConfigULOnly indicates a frequency band that supports being configured as the first cell, and bandIndex indicates an index of the frequency band that supports being configured as the first cell. For example, assuming that the terminal device reports, by using the capability information, that the first frequency band combination is a combination of a frequency band of 700 MHz, a frequency band of 800 MHz, and a frequency band of 2.6 GHz, cells corresponding to the frequency band of 700 MHz and the frequency band of 800 MHz in the first frequency band combination support being configured as first cells, and corresponding frequency bands in the corresponding bandConfigULOnlyList are the frequency band of 700 MHz and the frequency band of 800 MHz, the network device may configure, based on the capability information, the cells corresponding to the frequency band of 700 MHz and the frequency band of 800 MHz in the first frequency band combination as the first cells, or the network device may configure the cells corresponding to the frequency band of 700 MHz and the frequency band of 800 MHz in the first frequency band combination as second cells. Because the frequency band of 2.6 GHz does not support being configured as the first cell, a cell corresponding to the frequency band of 2.6 GHz can be configured only as the second cell. Based on this implementation, the network device can flexibly determine whether a cell needs to be configured for the terminal device as the first cell.

In a possible implementation, that the capability information indicates whether the cell corresponding to the first frequency band included in the first frequency band combination supports being configured as the first cell is specifically: The capability information indicates that the cell corresponding to the first frequency band included in the first frequency band combination supports being configured only as the first cell, or the cell corresponding to the first frequency band supports being configured only as a second cell, and when the second cell is configured for the terminal device, the terminal device is capable of using a downlink carrier of the second cell for communication. Optionally, related signaling may be added to a spectrum parameter (BandParameters) included in the capability information. Specific signaling may be represented as follows:

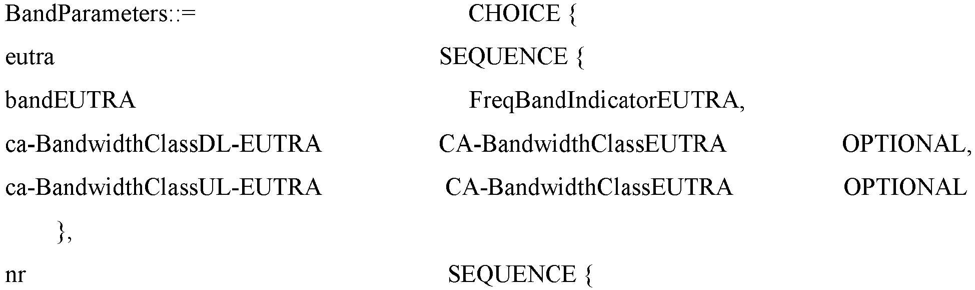

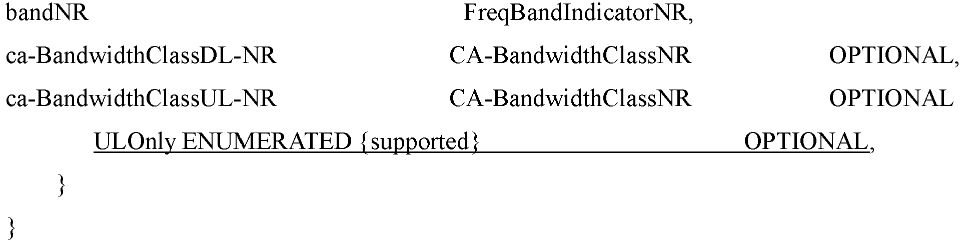

The underlined part is the added signaling. When a value of a parameter ULOnly is set to supported or when the parameter UL only exists, it indicates that the corresponding frequency band supports being configured only as the first cell. When the parameter is set to a default value, it indicates that the cell corresponding to the frequency band supports being configured only as the second cell.

302: The network device sends RRC signaling to the terminal device, and correspondingly, the terminal device receives the RRC signaling sent by the network device. The RRC signaling indicates a second frequency band combination configured for the terminal device, the second frequency band combination includes the first cell, and the second frequency band combination is one of the plurality of first frequency band combinations.

In this embodiment of this application, the network device indicates, by using the RRC signaling, the second frequency band combination configured for the terminal device and a cell configured for the terminal device. The RRC signaling specifically further includes whether each cell is configured as the first cell. When a cell is configured for the terminal device as the first cell, and the terminal device obtains configuration information of the cell by using the RRC signaling, the terminal device may not need to read all or a part of configuration information related to a downlink carrier corresponding to the cell. For example, the terminal device may not need to obtain one or more of the following configuration information of the first cell: an initial access bandwidth part (Bandwidth Part, BWP) configuration, a downlink BWP configuration, a first active downlink BWP except terminal device-specific PDCCH configuration information, default downlink BWP configuration information, PDSCH configuration information, and a channel state information-reference signal (Channel State Information-Reference Signal, CSI-RS) configuration. The first active downlink BWP is a BWP used by a downlink of a cell when the cell is just activated.

In a possible implementation, a first cell indicator field is added to the RRC signaling, to further describe whether the cell is configured as the first cell. The indicator field may be defined in a serving cell configuration (ServingCellConfig). For example, specific signaling may be represented as follows:

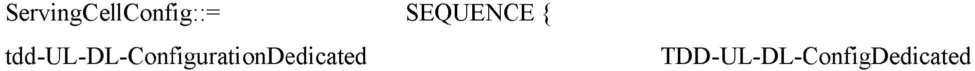

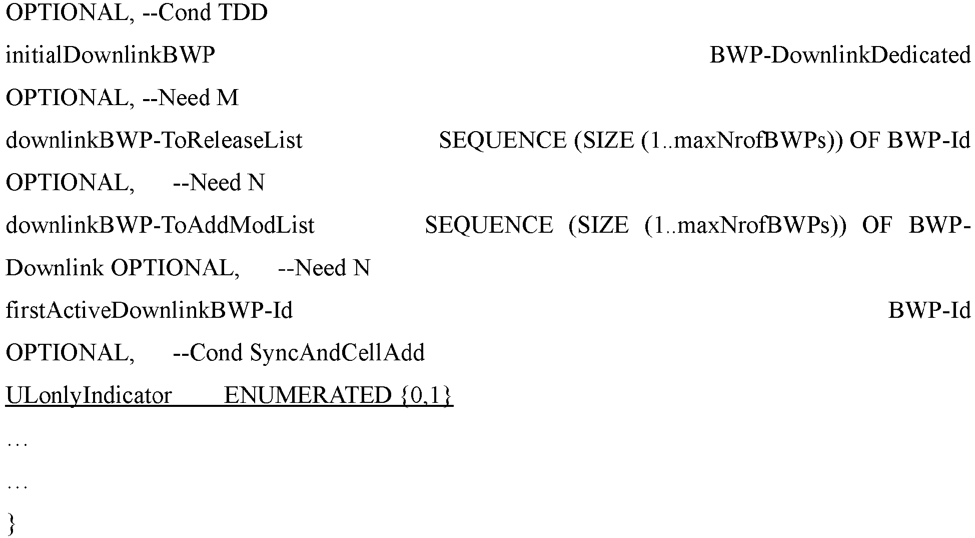

ULonlyIndicator is the first cell indicator field, and indicates whether the cell is configured as the first cell. The indicator field includes 1 bit, 0 indicates that the cell is configured as the second cell, and 1 indicates that the cell is configured as the first cell.

In another possible implementation, special values may be defined in some fields in cell configuration information included in the RRC signaling. For example, when a cell is configured for the terminal device, if a default BWP field value of the cell is not within a predefined downlink BWP configuration range, it indicates that the cell is configured as the first cell. The default BWP field value is a default downlink BWP identifier (defaultDownlinkBWP-Id) in ServingCellConfig. When a predefined default BWP field value of a cell falls within the downlink BWP configuration range, it may be understood as that the cell is configured as the second cell. For example, currently, a BWP ID range is usually 0 to 4, and it is set that when the default BWP field value is configured as -1, it may be determined that the cell is configured as the first cell.

When a cell is configured as the first cell, the terminal device cannot use a downlink carrier of the cell. Therefore, downlink timing information of the cell needs to be obtained through a primary cell or another associated secondary cell. In a possible implementation, the RRC signaling further includes cell configuration information, and the cell configuration information indicates one or more of the following information: synchronous timing information of the first cell, DCI blind detection information, and a first cell index. The method further includes: The terminal device receives, based on the DCI blind detection information by using a downlink carrier of a cell corresponding to the first cell index, DCI that is from the network device and that is used to schedule an uplink carrier of the first cell. Based on this implementation, the terminal device can obtain downlink timing information of the first cell through another cell.

Optionally, the cell configuration information indicates a second cell index and/or a timing offset between a cell corresponding to the second cell index and the first cell, and the cell corresponding to the second cell index belongs to the second cell. The second cell index and/or the timing offset between the cell corresponding to the second cell index and the first cell are/is indicated in a manner of adding a new indicator field to the cell configuration information. For example, an indicator field may be added to the ServingCellConfig field to indicate the second cell index. The cell corresponding to the second cell index may be a primary cell or another secondary cell that is not the first cell. Further, optionally, if the cell configuration information indicates only the second cell index, the network device may also subsequently notify, by adding an indicator field to DCI, RRC, or a MAC-CE, the terminal device of the timing offset between the cell corresponding to the second cell index and the first cell. The timing offset between the cell corresponding to the second cell index and the first cell is a quantity of time units between a start location of a 1^{st} symbol in a slot 0 of the first cell and a start location of a 1^{st} symbol in a slot 0 of the cell corresponding to the second cell index, for example, x µs, x Ts, or x slots. Further, optionally, the cell configuration information indicates that the synchronous timing information of the first cell is the same as synchronous timing information of the primary cell. In this implementation, the cell corresponding to the second cell index may be the primary cell or a secondary cell whose synchronous timing information is the same as that of the primary cell. Based on this implementation, the terminal device can obtain downlink timing information of the first cell through another cell.

The following describes a specific implementation provided in this embodiment of this application.

Step 1: The terminal device completes random access, and establishes an RRC connection to a PCell.

Step 2: The terminal device sends capability information to the network device, and correspondingly, the network device receives the capability information sent by the terminal device. A specific implementation of step 2 is the same as that of step 301. Details are not described herein again in this embodiment of this application.

Step 3: The network device sends RRC signaling to the terminal device, and correspondingly, the terminal device receives the RRC signaling sent by the network device. A specific implementation of step 3 is the same as that of step 302. Details are not described herein again in this embodiment of this application.

Step 4: The network device sends a medium access control-control element (Medium Access Control-Control Element, MAC-CE) to the terminal device, and correspondingly, the terminal device receives the MAC-CE sent by the network device. The MAC-CE indicates a frequency band or uplink and downlink carriers that correspond to an SCell and that need to be activated by the terminal device. It should be additionally noted that not all frequency bands or carriers in a frequency band group are necessarily activated, only some frequency bands or carriers in the frequency band group may be activated, or all frequency bands or carriers in the frequency band group may not be activated.

Step 5: The network device sends DCI to the terminal device, and correspondingly, the terminal device receives the DCI sent by the network device. Because the terminal device cannot use the downlink carrier of the first cell, the terminal device needs to obtain, through the cell corresponding to the first cell index, the DCI for scheduling the first cell. Both uplink and downlink carriers scheduled by using the DCI are the uplink and downlink carriers that have been activated in the MAC-CE in step 4.

Step 6: The terminal device sends information on the uplink carrier based on the DCI, and/or receives information on the downlink carrier based on the DCI. The downlink carrier does not include the downlink carrier of the first cell.

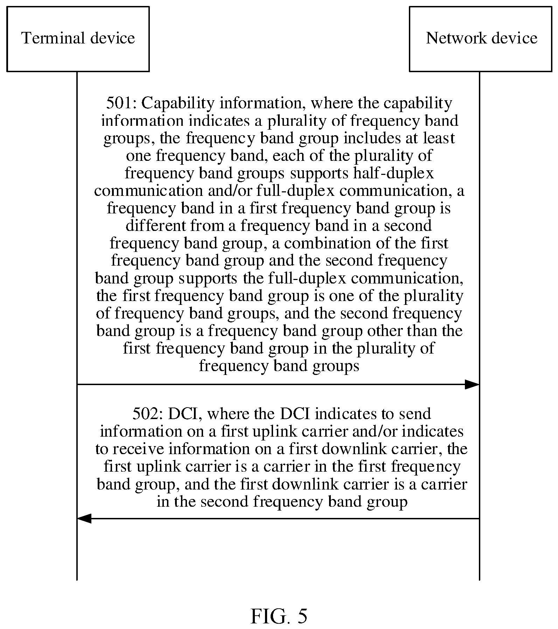

To avoid affecting downlink communication, an embodiment of this application provides a communication method. As shown in FIG. 5, the communication method includes step 501 and step 502. The method shown in FIG. 5 may be performed by a terminal device and a network device, or may be performed by a chip in the terminal device and a chip in the network device. In FIG. 5, an example in which the method is performed by the terminal device and the network device is used for description.

501: The terminal device sends capability information to the network device, and correspondingly, the network device receives the capability information sent by the terminal device. The capability information indicates a plurality of frequency band groups, the frequency band group includes at least one frequency band, each of the plurality of frequency band groups supports half-duplex communication and/or full-duplex communication, a frequency band in a first frequency band group is different from a frequency band in a second frequency band group, a combination of the first frequency band group and the second frequency band group supports the full-duplex communication, the first frequency band group is one of the plurality of frequency band groups, and the second frequency band group is a frequency band group other than the first frequency band group in the plurality of frequency band groups.

In this embodiment of this application, the capability information indicates the plurality of frequency band groups supported by the terminal device, and each frequency band group includes at least one frequency band. Each of the plurality of frequency band groups supports the half-duplex communication and/or the full-duplex communication. The half-duplex communication means that both communication parties can send or receive information, but the two communication parties cannot send or receive information simultaneously. In this communication manner, one party performs sending and the other party performs receiving. The full-duplex communication means that bidirectional transmission can be performed on information at the same time. The first frequency band group is one of the plurality of frequency band groups, and the second frequency band group is the frequency band group other than the first frequency band group in the plurality of frequency band groups. The first frequency band group and the second frequency band group may alternatively be understood as two frequency band groups in the plurality of frequency band groups. That the frequency band in the first frequency band group is different from the frequency band in the second frequency band group may be understood as that frequency bands included in the plurality of frequency band groups are mutually exclusive, that is, one frequency band belongs to only one frequency band group. For example, if a frequency band A is included in a frequency band group 1, the frequency band A is definitely not in a frequency band group other than the frequency band group 1 in the plurality of frequency band groups. That the combination of the first frequency band group and the second frequency band group supports the full-duplex communication may be understood as that two frequency band groups in the plurality of frequency band groups support the full-duplex communication.

In a possible implementation, a frequency band group may be predefined in a protocol. The network device may determine, by using frequency band combinations included in the reported capability information and according to a frequency band group rule predefined in the protocol, a frequency band group supported by the terminal device. In addition, the terminal device may also determine, based on the reported frequency band combinations and according to the frequency band group rule, the supported frequency band group, so that the frequency band group is the same as the frequency band group determined by the network device. Optionally, the protocol predefines that frequency bands included in the frequency band groups are divided based on sizes of the frequency bands. For example, it is assumed that a frequency of a frequency band included in a frequency band group 1 is predefined to be less than 2 GHz, a frequency of a frequency band included in a frequency band group 2 is predefined to be greater than or equal to 2 GHz and less than 6 GHz, and a frequency of a frequency band included in a frequency band group 3 is predefined to be greater than or equal to 6 GHz. When the terminal device reports, by using the frequency band combinations in the capability information, that a frequency band combination supported by the terminal device is a combination of 700 MHz, 1.8 GHz, 2.6 GHz, 4.9 GHz, and U6 GHz, the network device and the terminal device determine, according to a rule predefined in a protocol, that when the frequency band combination is used for operating, a plurality of frequency band groups corresponding to the frequency band combination are the frequency band group 1 (700 MHz, 1.8 GHz), the frequency band group 2 (2.6 GHz, 4.9 GHz), and the frequency band group 3 (U6 GHz). Based on this implementation, current signaling does not need to be changed, and only a predefined rule is added, so that the network device and the terminal device can quickly determine a supported frequency band group.

In a possible implementation, the frequency band group may be reported by the terminal device by using the capability information, that is, the terminal device directly reports, by using the capability information, the frequency band group supported by the terminal device. Optionally, related signaling may be added to the capability information for implementation. A quantity of concurrent uplinks in different frequency band groups may be configured independently. For example, related signaling may be added to a BandCombination information element included in the capability information. Specific signaling may be represented as follows:

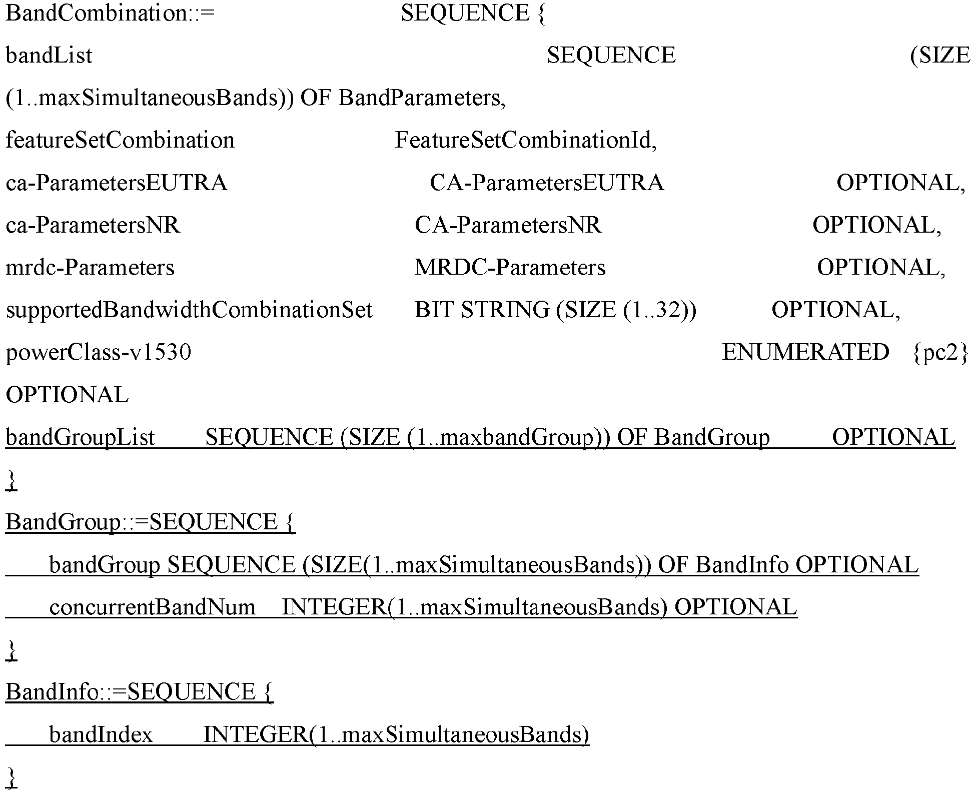

The underlined part is the added signaling, where bandGroupList represents a frequency band group list or may be understood as a frequency band group sequence; bandGroup represents a frequency band group, which is formed by a plurality of pieces of BandInfo, and BandInfo represents frequency band information; concurrentBandNum represents a quantity of concurrent uplink frequency bands in the frequency band group; and bandIndex is an index corresponding to a frequency band. Based on this implementation, the terminal device can flexibly report the frequency band group supported by the terminal device.

502: The network device sends DCI to the terminal device, and correspondingly, the terminal device receives the DCI sent by the network device. The DCI indicates to send information on a first uplink carrier and/or indicates to receive information on a first downlink carrier, the first uplink carrier is a carrier in the first frequency band group, and the first downlink carrier is a carrier in the second frequency band group.

In this embodiment of this application, the network device may schedule, by using the DCI, an uplink carrier and/or a downlink carrier used by the terminal device. A relationship between a carrier and a frequency band is as follows: One frequency band may include one or more carriers. The network device performs scheduling and activation by using a carrier as a unit. That the DCI indicates to send the information on the first uplink carrier and/or indicates to receive the information on the first downlink carrier, the first uplink carrier is the carrier in the first frequency band group, and the first downlink carrier is the carrier in the second frequency band group may be correspondingly understood as that when the network device schedules the terminal device by using the DCI, some or all frequency bands in one frequency band group can be used only for uplink transmission or downlink transmission at one moment. Based on the method, uplink and downlink decoupling can be enabled according to a duplex rule of the frequency band group. In proper uplink and downlink independent configurations, a frequency component generated through IMD or harmonic distortion caused by concurrency of a plurality of uplink frequency bands or carriers does not affect receiver sensitivity of the terminal device that is operating on a downlink frequency band or carrier.

In a possible implementation, a frequency component of a distorted signal generated through aggregation of at least two carriers in the first frequency band group is different from a frequency component of a carrier in the second frequency band group. Based on this implementation, it can be avoided that when the network device schedules an uplink carrier and a downlink carrier, a frequency component of a distorted signal generated through uplink carrier aggregation is the same as a frequency component corresponding to the downlink carrier, thereby avoiding impact of the distorted signal generated through uplink carrier aggregation on signal receiving by the terminal device by using the downlink carrier.

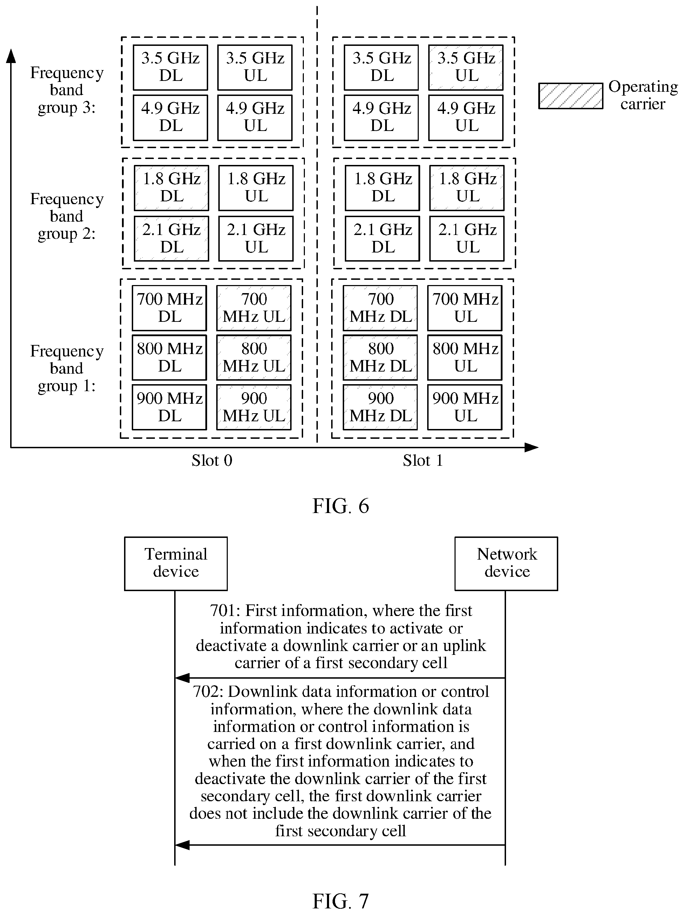

The method described in this embodiment of this application is used as an example below. It is assumed that frequency bands supported by the terminal device include a frequency band of 700 MHz, a frequency band of 800 MHz, a frequency band of 900 MHz, a frequency band of 1.8 GHz, a frequency band of 2.1 GHz, a frequency band of 3.5 GHz, and a frequency band of 4.9 GHz, and each frequency band includes one uplink carrier and one downlink carrier. As shown in FIG. 6, the frequency bands supported by the terminal device are divided into three frequency band groups: (1) A frequency band group 1 includes the frequency band of 700 MHz, the frequency band of 800 MHz, and the frequency band of 900 MHz; (2) a frequency band group 2 includes the frequency band of 1.8 GHz and the frequency band of 2.1 GHz; and (3) a frequency band group 3 includes the frequency band of 3.5 GHz and the frequency band of 4.9 GHz. To avoid impact of concurrency of uplink frequency bands or carriers on receiving on downlink frequency bands or carriers that are operating simultaneously, in a slot 0, the network device indicates, by using the DCI, the terminal device to perform uplink transmission on uplink carriers corresponding to the frequency band of 700 MHz, the frequency band of 800 MHz, and the frequency band of 900 MHz, and perform downlink transmission on downlink carriers corresponding to the frequency band of 1.8 GHz and the frequency band of 2.1 GHz. To be specific, full-duplex communication is used between the frequency band group 1 and the frequency band group 2, and half-duplex communication is used within the frequency band group 1 and the frequency band group 2. Because a frequency component of a distorted signal generated through aggregation of the frequency band of 700 MHz, the frequency band of 800 MHz, and the frequency band of 900 MHz is not 1.8 GHz and 2.1 GHz, downlink receiving is not affected. In a slot 1, the network device indicates the terminal device to perform downlink transmission on downlink carriers corresponding to the frequency band of 700 MHz, the frequency band of 800 MHz, and the frequency band of 900 MHz, and perform uplink transmission on uplink carriers corresponding to the frequency band of 1.8 GHz and the frequency band of 3.5 GHz. In other words, full-duplex is used among the frequency band group 1, the frequency band group 2, and the frequency band group 3 for operating, and half-duplex is used within the frequency band group 1, the frequency band group 2, and the frequency band group 3 for operating. Because a frequency component of a distorted signal generated through aggregation of the frequency band of 1.8 GHz and the frequency band of 3.5 GHz is not 700 MHz, 800 MHz, and 900 MHz, downlink receiving is not affected. Based on this implementation, a frequency band group and a rule of the frequency band group are defined, and uplink and downlink decoupling are implemented in the frequency band group, that is, at a same moment, only uplink transmission or downlink transmission can be performed on a frequency band or a carrier in the frequency band group. In proper uplink and downlink configurations, IMD or harmonic distortion caused by concurrency of a plurality of uplink frequency bands or carriers does not affect receiver sensitivity of the terminal device that is operating on a downlink frequency band.

The following describes a specific implementation provided in this embodiment of this application.

Step 1: The terminal device completes random access, and establishes an RRC connection to a PCell.

Step 2: The terminal device sends capability information to the network device, and correspondingly, the network device receives the capability information sent by the terminal device. A specific implementation of step 2 is the same as that of step 501. Details are not described herein again in this embodiment of this application.

Step 3: The network device sends RRC signaling to the terminal device, and correspondingly, the terminal device receives the RRC signaling sent by the network device. The RRC signaling includes configuration information of an SCell configured by the network device for the terminal device.

Step 4: The network device sends a MAC-CE to the terminal device, and correspondingly, the terminal device receives the MAC-CE sent by the network device. The MAC-CE indicates a frequency band or uplink and downlink carriers that correspond to an SCell and that need to be activated by the terminal device. It should be additionally noted that not all frequency bands or carriers in a frequency band group are necessarily activated, only some frequency bands or carriers in the frequency band group may be activated, or all frequency bands or carriers in the frequency band group may not be activated.

Step 5: The network device sends DCI to the terminal device, and correspondingly, the terminal device receives the DCI sent by the network device. A specific implementation of step 5 is the same as that of step 502. It should be additionally noted that both uplink and downlink carriers scheduled by using the DCI are the uplink and downlink carriers that have been activated in the MAC-CE in step 4.

Step 6: The terminal device sends information on a first uplink carrier based on the DCI, and/or receives information on a first downlink carrier based on the DCI.

To avoid affecting downlink communication, an embodiment of this application provides a communication method. As shown in FIG. 7, the communication method includes step 701 and step 702. The method shown in FIG. 7 may be performed by a terminal device and a network device, or may be performed by a chip in the terminal device and a chip in the network device. In FIG. 7, an example in which the method is performed by the terminal device and the network device is used for description.

701: The network device sends first information to the terminal device, and correspondingly, the terminal device receives the first information. The first information indicates to activate or deactivate a downlink carrier or an uplink carrier of a first secondary cell.

702: The network device sends downlink data information or control information to the terminal device by using a first downlink carrier, and correspondingly, the terminal device receives, on the first downlink carrier, the downlink data information or the control information sent by the network device. The downlink data information or the control information is carried on the first downlink carrier. When the first information indicates to deactivate the downlink carrier of the first secondary cell, the first downlink carrier does not include the downlink carrier of the first secondary cell.

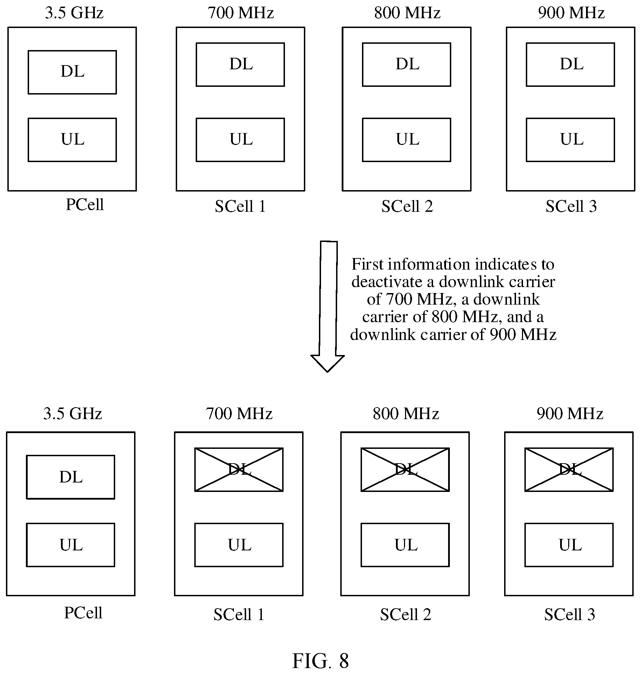

In this embodiment of this application, deactivating the downlink carrier of the first secondary cell may be understood as that the terminal device does not use the downlink carrier of the first secondary cell, that is, the downlink carrier of the first secondary cell does not operate. Activating the downlink carrier of the first secondary cell may be understood as that the terminal device can use the downlink carrier of the first secondary cell, that is, the downlink carrier of the first secondary cell may be scheduled. Deactivating and activating the uplink carrier are similar to deactivating and activating the downlink carrier. Details are not described herein again in this embodiment of this application. For example, as shown in FIG. 8, it is assumed that a frequency band of a PCell configured by the network device for the terminal device is 3.5 GHz, and frequency bands corresponding to SCells are respectively a frequency band of 700 MHz, a frequency band of 800 MHz, and a frequency band of 900 MHz. When an uplink carrier of 700 MHz, an uplink carrier of 800 MHz, and an uplink carrier of 900 MHz are simultaneously activated and operate, a generated distorted signal affects receiving on a downlink carrier of 700 MHz, and the first information indicates to deactivate the downlink carrier of 700 MHz, a downlink carrier of 800 MHz, and a downlink carrier of 900 MHz, so that for the terminal device, activation statuses of the uplink and downlink carriers are changed as follows: An uplink carrier of 3.5 GHz, the uplink carrier of 700 MHz, the uplink carrier of 800 MHz, and the uplink carrier of 900 MHz are all activated and can operate, and a downlink carrier of 3.5 GHz is activated. The downlink carrier of 700 MHz, the downlink carrier of 800 MHz, and the downlink carrier of 900 MHz are all deactivated. Based on the method, when a frequency component of a distorted signal generated through aggregation of at least two uplink carriers in a plurality of uplink carriers activated by the terminal device is the same as a frequency component of the downlink carrier corresponding to the first secondary cell, the network device may indicate, by using the first information, to deactivate the downlink carrier corresponding to the first secondary cell, to avoid affecting downlink receiving. In addition, the network device may alternatively deactivate the at least two uplink carriers. For example, a frequency component of a distorted signal generated through aggregation of at least two uplink carriers is the same as the frequency component of the downlink carrier corresponding to the first secondary cell. If the at least two uplink carriers are deactivated, downlink receiving is not affected. This is not limited in this embodiment of this application.

There are the following two specific implementations in which the first information indicates to activate or deactivate the downlink carrier or the uplink carrier of the first secondary cell.

Manner 1: The first information may be carried in a MAC-CE, DCI, or RRC signaling, to independently indicate whether the uplink carrier or the downlink carrier of the first secondary cell is activated or deactivated. For example, the DCI is used as an example, 1-bit indicator fields DLindicator may be added to DCI Format1_0, DCI Format1_1, and DCI Format1_2 for scheduling a PDSCH carrier. When a bit value is 1, it indicates that the downlink carrier of the first secondary cell does not operate from a next slot, and then cross-carrier scheduling indication may be performed, that is, DCI for scheduling a carrier of the first secondary cell is obtained through a primary cell or another secondary cell. When the bit value is 0, it indicates that operating of the downlink carrier of the first secondary cell is resumed. Similarly, 1-bit indicator fields ULindicator may alternatively be added to DCI such as DCI Format0_0, Format0_1, and Format0_2 for scheduling uplink. When a bit value is 1, it indicates that the uplink carrier of the first secondary cell does not operate from a next slot. When the bit value is 0, it indicates that operating of the uplink carrier of the first secondary cell is resumed. For another example, the MAC-CE is used as an example. An indicator field may be added to the MAC-CE. The indicator field includes at least one bit, and one or more bits correspond to one cell. Deactivation or activation of each cell is determined based on a bit value corresponding to the cell. It is assumed that the indicator field that is added to the MAC-CE and that indicates activation or deactivation of a cell includes M bits. To implement independent activation/deactivation of uplink and downlink carriers, for example, it is assumed that two bits in the M bits correspond to one cell. In this case, M is an even number greater than or equal to 2, a 1^{st} bit and a 2^{nd} bit in the M bits indicate a cell 1, a 3^{rd} bit and a 4^{th} bit indicate a cell 2, and by analogy, an (M-1)^{th} bit and an M^{th} bit indicate a cell N, where N is equal to M/2. For two bits indicating one cell, a 1^{st} bit corresponding to the cell indicates activation or deactivation of an uplink carrier (0 represents deactivation, and 1 represents activation), and a 2^{nd} bit corresponding to the cell indicates activation or deactivation of a downlink carrier (0 represents deactivation, and 1 represents activation). Alternatively, a 1^{st} bit corresponding to the cell indicates activation or deactivation of a downlink carrier (0 represents deactivation, and 1 represents activation), and a 2^{nd} bit corresponding to the cell indicates activation or deactivation of an uplink carrier (0 indicates deactivation, and 1 indicates activation). For example, assuming that the 1^{st} bit and the 2^{nd} bit corresponding to the cell 1 are 10, it indicates that an uplink carrier of the cell 1 is activated and a downlink carrier of the cell 1 is deactivated.

Manner 2: Before step 701 is performed, the terminal device receives RRC signaling sent by the network device, where the RRC signaling indicates configuration information of the first secondary cell, the configuration information of the first secondary cell includes configuration information of a plurality of downlink BWPs, the configuration information of the plurality of downlink BWPs includes configuration information of a first downlink BWP, and the configuration information of the first downlink BWP indicates to deactivate the downlink carrier of the first secondary cell on the first downlink BWP. That the first information indicates to deactivate the downlink carrier of the first secondary cell is specifically: The first information indicates to switch a downlink BWP of the first secondary cell to the first downlink BWP. Optionally, the first information is carried in the DCI.

The network device configures a plurality of downlink BWPs for the terminal device by using the RRC signaling. Generally, only one BWP is switched to or activated at one moment. Configuration information of the plurality of downlink BWPs includes configuration information of a first downlink BWP, and the configuration information of the first downlink BWP indicates to deactivate the downlink carrier of the first secondary cell on the first downlink BWP. In other words, when the network device sends the first information to indicate the terminal device to switch the downlink BWP of the first secondary cell to the first downlink BWP, the terminal device deactivates the downlink carrier of the first secondary cell. In addition, a downlink BWP other than the first downlink BWP in the plurality of downlink BWPs supports being used for downlink transmission and receiving. When the first information indicates to switch the downlink BWP of the first secondary cell to a BWP other than the first downlink BWP, it indicates that the downlink carrier of the first secondary cell is activated. After the downlink carrier of the first secondary cell is deactivated, the network device can schedule the uplink carrier of the first secondary cell only in a cross-carrier scheduling manner, that is, the network device can schedule the uplink carrier of the first secondary cell only through a primary cell or another secondary cell. Therefore, the configuration information of the first downlink BWP further includes PDCCH blind detection information of the network device obtained through the primary cell or the another secondary cell. Optionally, a BWPNoDL field may be added to BWP-DownlinkDedicated in the RRC signaling. When a value of the field is enabled or when the field exists, it indicates that the BWP is the first downlink BWP.

It should be further additionally noted that the configuration information of the first secondary cell may further include configuration information of a plurality of uplink BWPs. The configuration information of the plurality of uplink BWPs includes configuration information of a first uplink BWP. The configuration information of the first uplink BWP indicates to deactivate the uplink carrier of the first secondary cell on the first uplink BWP. The network device may send the first information, where the first information indicates to switch an uplink BWP of the first secondary cell to the first uplink BWP, that is, deactivate the uplink carrier of the first secondary cell. A specific implementation of the first uplink BWP is the same as that of the first downlink BWP described above, and details are not described herein again in this embodiment of this application.

Optionally, the first information may indicate to activate or deactivate a downlink carrier or an uplink carrier of the primary cell. An implementation thereof is similar to that of activating or deactivating the downlink carrier or the uplink carrier of the first secondary cell. Details are not described herein again in this embodiment of this application.

The following describes a specific implementation provided in this embodiment of this application.

Step 1: The terminal device completes random access, and establishes an RRC connection to a PCell.

Step 2: The terminal device sends capability information to the network device, and correspondingly, the network device receives the capability information sent by the terminal device.

Step 3: The network device sends RRC signaling to the terminal device, and correspondingly, the terminal device receives the RRC signaling sent by the network device. If an implementation corresponding to Manner 2 described above is used, the RRC signaling includes the configuration information of the first secondary cell, the configuration information of the first secondary cell includes the configuration information of the plurality of downlink BWPs, the configuration information of the plurality of downlink BWPs includes the configuration information of the first downlink BWP, and the configuration information of the first downlink BWP indicates to deactivate the downlink carrier of the first secondary cell on the first downlink BWP.

Step 4: The network device sends first information to the terminal device, and correspondingly, the terminal device receives the first information sent by the network device. The first information indicates to activate or deactivate the downlink carrier or the uplink carrier of the first secondary cell. A specific implementation of step 4 is the same as the descriptions corresponding to step 701. If an implementation of Manner 1 described above is used, the first information may be carried in the MAC-CE, the DCI, or the RRC signaling. For a specific implementation, refer to the foregoing descriptions. If the implementation of Manner 2 described above is used, the first information may be carried in the DCI. For a specific implementation, refer to the foregoing descriptions. Details are not described herein again.

Step 5: The network device and the terminal device perform signal transmission based on the first information. A specific implementation of this step is the same as the descriptions corresponding to step 702. Details are not described herein again in this embodiment of this application.

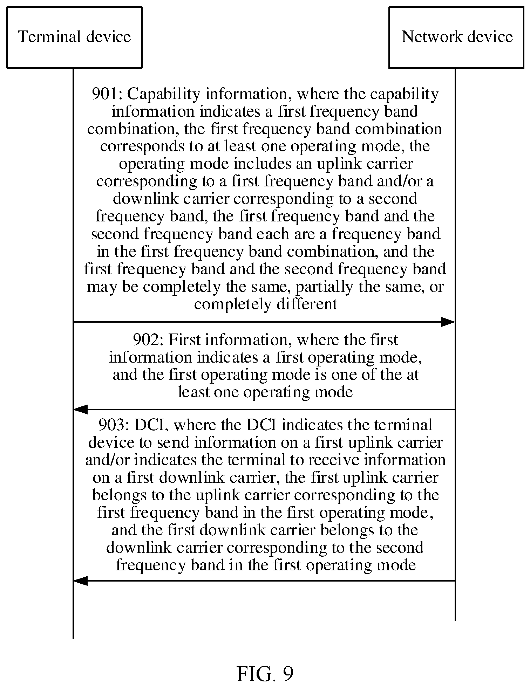

To avoid affecting downlink communication, an embodiment of this application provides a communication method. As shown in FIG. 9, the communication method includes step 901 and step 903. The method shown in FIG. 9 may be performed by a terminal device and a network device, or may be performed by a chip in the terminal device and a chip in the network device. In FIG. 9, an example in which the method is performed by the terminal device and the network device is used for description.

901: The terminal device sends capability information to the network device, and correspondingly, the network device receives the capability information sent by the terminal device. The capability information indicates a first frequency band combination, the first frequency band combination corresponds to at least one operating mode, the operating mode includes an uplink carrier corresponding to a first frequency band and/or a downlink carrier corresponding to a second frequency band, the first frequency band and the second frequency band each are a frequency band in the first frequency band combination, and the first frequency band and the second frequency band may be completely the same, partially the same, or completely different.

In this embodiment of this application, the terminal device reports a supported first frequency band combination by using the capability information. The first frequency band combination includes at least two frequency bands, an operating mode corresponding to the first frequency band combination may be understood as a subset of the first frequency band combination, each operating mode includes an uplink carrier and a downlink carrier of a PCell, and SCells included in the operating mode may be some or all SCells in the first frequency band combination. Specifically, when a first SCell is included in the operating mode, the operating mode may include an uplink carrier and/or a downlink carrier of the first SCell.

The at least one operating mode corresponding to the first frequency band combination may be reported by the terminal device by using the capability information, may be determined by the network device, or may be predefined. A specific implementation is as follows.

Manner 1: The at least one operating mode corresponding to the first frequency band combination is reported by the terminal device by using the capability information. That is, the capability information includes the at least one operating mode, and the terminal device may report, based on a capability of the terminal device, an operating mode supported by the terminal device. Based on this implementation, the terminal device can flexibly determine the operating mode supported by the terminal device. Optionally, signaling may be added to BandCombination in the capability information to indicate the operating mode supported by the terminal device. Specific signaling may be represented as follows:

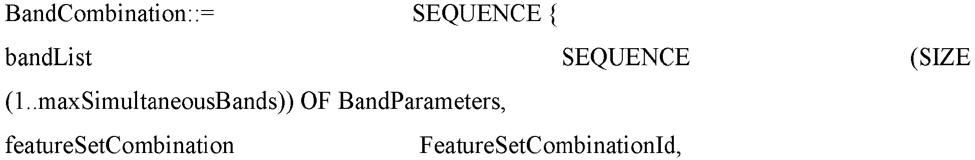

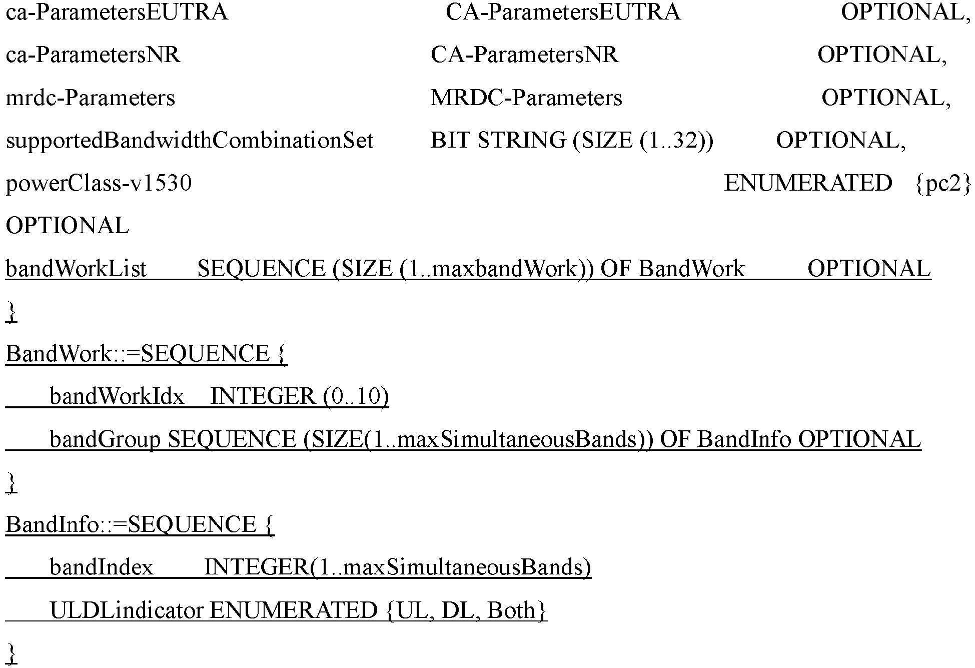

The underlined part is the added signaling part, bandWorkList represents a supported operating mode set, BandWork represents an operating mode, bandWorkIdx represents an index of an operating mode, bandGroup represents specific information of an operating mode, BandInfo represents specific information of a frequency band in an operating mode, bandIndex represents a frequency band index, and ULDLindicator represents an uplink carrier or a downlink carrier that corresponds to the frequency band and that is included in the operating mode, or both the uplink carrier and the downlink carrier that are of the frequency band and that are included in the operating mode, where UL indicates that only the uplink carrier is included, DL indicates that only the downlink carrier is included, and Both indicates that both the uplink carrier and the downlink carrier are included.

Manner 2: The at least one operating mode corresponding to the first frequency band combination is determined by the network device. After the network device receives the capability information sent by the terminal device, the network device determines the at least one operating mode based on the first frequency band combination; and the network device sends RRC signaling to the terminal device, where the RRC signaling indicates the at least one operating mode. Based on this implementation, the network device can flexibly determine an operating mode corresponding to the first frequency band combination. Optionally, signaling may be added to a CellGroupConfig information element of the RRC signaling to indicate the at least one operating mode. Specific signaling may be represented as follows:

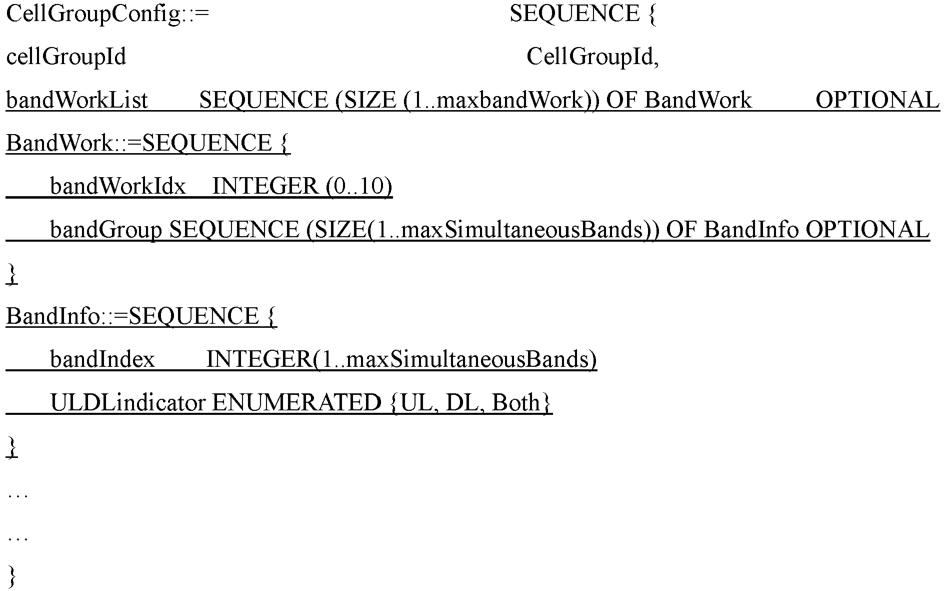

The underlined part is the added signaling part, bandWorkList represents a supported operating mode set, BandWork represents an operating mode, bandWorkIdx represents an index of an operating mode, bandGroup represents specific information of an operating mode, BandInfo represents specific information of a frequency band in an operating mode, bandIndex represents a frequency band index, and ULDLindicator represents an uplink carrier or a downlink carrier that corresponds to the frequency band and that is included in the operating mode, or both the uplink carrier and the downlink carrier that are of the frequency band and that are included in the operating mode, where UL indicates that only the uplink carrier is included, DL indicates that only the downlink carrier is included, and Both indicates that both the uplink carrier and the downlink carrier are included. Manner 3: The at least one operating mode corresponding to the first frequency band combination is predefined. At least one operating mode corresponding to each frequency band combination may be predefined in a protocol. After the terminal device reports the first frequency band combination by using the capability information, it indicates that the terminal device supports all predefined operating modes corresponding to the first frequency band combination. Based on this implementation, the terminal device and the network device do not need to determine each operating mode, so that signaling overheads are reduced.

902. The network device sends first information to the terminal device, where the first information indicates a first operating mode, and the first operating mode is one of the at least one operating mode.

903: The network device sends DCI to the terminal device, and correspondingly, the terminal device receives the DCI sent by the network device. The DCI indicates the terminal device to send information on a first uplink carrier and/or indicates the terminal to receive information on a first downlink carrier, the first uplink carrier belongs to the uplink carrier corresponding to the first frequency band in the first operating mode, and the first downlink carrier belongs to the downlink carrier corresponding to the second frequency band in the first operating mode.

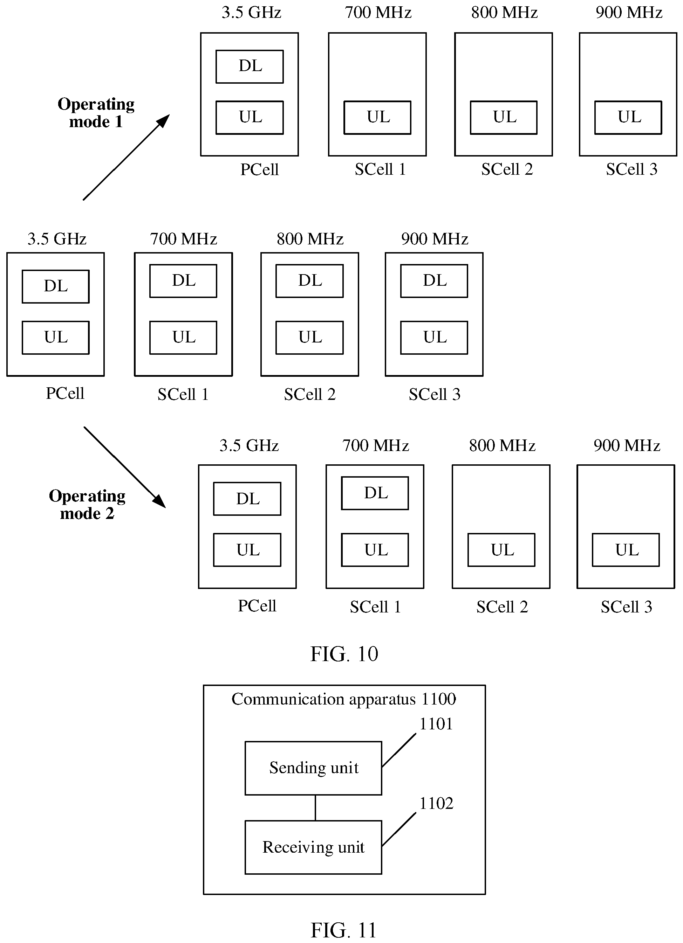

In this embodiment of this application, the network device may indicate, by using the first information, an operating mode that the terminal device currently needs to use, and at one moment, indicate the terminal device to operate in only one operating mode, for example, the first operating mode. Optionally, the first information may be carried in a MAC-CE, DCI, or RRC signaling. For example, as shown in FIG. 10, a frequency band combination reported by the terminal device is a combination of a frequency band of 3.5 GHz, a frequency band of 700 MHz, a frequency band of 800 MHz, and a frequency band of 900 MHz. A cell corresponding to the frequency band of 3.5 GHz is a PCell, and cells corresponding to the frequency band of 700 MHz, the frequency band of 900 MHz, and the frequency band of 900 MHz are SCells. In the frequency band combination, two operating modes are defined. An operating mode 1 is an uplink carrier and a downlink carrier of 3.5 GHz, an uplink carrier of 700 MHz, an uplink carrier of 900 MHz, and an uplink carrier of 900 MHz. An operating mode 2 is an uplink carrier and a downlink carrier of 3.5 GHz, a downlink carrier of 700 MHz, an uplink carrier of 900 MHz, and an uplink carrier of 900 MHz. When uplink concurrency of 700 MHz, 900 MHz, and 900 MHz needs to be enabled, a frequency component of a generated distorted signal is 700 MHz. Therefore, receiver sensitivity on the downlink carrier of 700 MHz is affected, and the terminal device is indicated to make the operating mode 1 take effect. The terminal device operates in a proper operating mode, so that uplink and downlink decoupling are enabled. In proper uplink and downlink independent configurations, a frequency component generated through IMD or harmonic distortion caused by concurrency of a plurality of uplink frequency bands does not affect receiver sensitivity of the terminal device that is operating on a downlink frequency band.

In a possible implementation, a frequency component of a distorted signal generated through aggregation of at least two uplink carriers corresponding to the first frequency band is different from a frequency component of the downlink carrier corresponding to the second frequency band. Based on this implementation, the terminal device operates in a proper operating mode, so that uplink and downlink decoupling can be implemented to some extent, to avoid a case in which the frequency component of the distorted signal generated through aggregation of the at least two uplink carriers corresponding to the first frequency band is the same as the frequency component of the downlink carrier corresponding to the second frequency band, so as to help avoid impact of the distorted signal generated through aggregation of the at least two uplink carriers corresponding to the first frequency band on signal receiving by the terminal device by using the downlink carrier corresponding to the second frequency band.

The following describes a specific implementation provided in this embodiment of this application.

Step 1: The terminal device completes random access, and establishes an RRC connection to a PCell.

Step 2: The terminal device sends capability information to the network device, and correspondingly, the network device receives the capability information sent by the terminal device. The terminal device reports a supported frequency band combination by using the capability information. A specific implementation of step 2 is the same as that of step 901. If an implementation of Manner 1 described above is used, the capability information includes the at least one operating mode. For a specific implementation, refer to the foregoing descriptions. Details are not described herein again. If an implementation of Manner 3 described above is used, the at least one operating mode corresponding to each frequency band combination is predefined in the protocol. After the terminal device reports the first frequency band combination by using the capability information, it indicates that the terminal device supports all predefined operating modes corresponding to the first frequency band combination. For a specific implementation, refer to the foregoing descriptions. Details are not described herein again.

Step 3: The network device sends RRC signaling to the terminal device, and correspondingly, the terminal device receives the RRC signaling sent by the network device. If an implementation of Manner 2 described above is used, the RRC signaling indicates the at least one operating mode determined by the network device. For a specific implementation, refer to the foregoing descriptions. Details are not described herein again.

Step 4: The network device indicates, by using first information, the terminal device to make a first operating mode take effect. A specific implementation is the same as that of step 902. Details are not described herein again in this embodiment of this application. The first information may be carried in a MAC-CE, DCI, or the RRC signaling.

Step 5: The network device sends the MAC-CE to the terminal device, and correspondingly, the terminal device receives the MAC-CE sent by the network device. The MAC-CE indicates a frequency band or uplink and downlink carriers that correspond to an SCell and that need to be activated by the terminal device. It should be additionally noted that not all frequency bands or carriers in a frequency band group are necessarily activated, only some frequency bands or carriers in the frequency band group may be activated, or all frequency bands or carriers in the frequency band group may not be activated.

Step 6: The network device sends the DCI to the terminal device, and correspondingly, the terminal device receives the DCI sent by the network device. A specific implementation of step 6 is the same as that of step 903. It should be additionally noted that both uplink and downlink carriers scheduled by using the DCI are the uplink and downlink carriers that have been activated in the MAC-CE in step 5, and are also uplink and downlink carriers in the effective first operating mode indicated by the network device by using the first information.

Step 7: The terminal device receives information on the scheduled downlink carrier based on the DCI, and sends information on the scheduled uplink carrier.

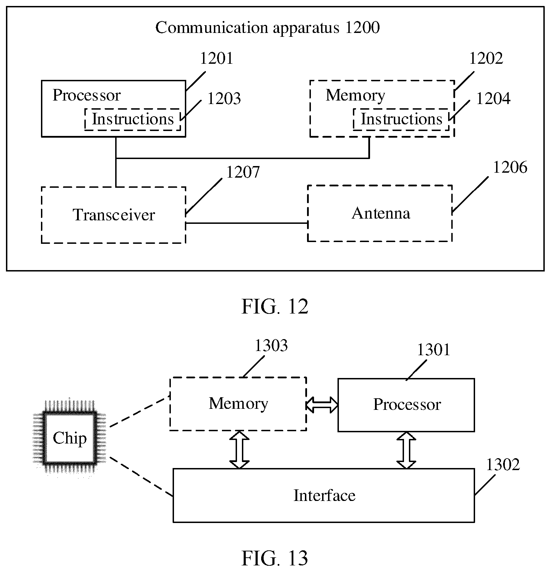

FIG. 11 and FIG. 12 each are a diagram of a possible structure of a communication apparatus according to an embodiment of this application. The communication apparatuses may be configured to implement functions of the terminal device or the network device in the foregoing method embodiments, and therefore can also implement the beneficial effects in the foregoing method embodiments. In embodiments of this application, the communication apparatus may be one of the terminals 120a to 120j shown in FIG. 1, may be the base station 110a or 110b shown in FIG. 1, or may be a module (for example, a chip) used in the terminal device or the network device.

As shown in FIG. 11, the communication apparatus 1100 may include a sending unit 1101 and a receiving unit 1102. The communication apparatus may perform related steps of the terminal device in the foregoing method embodiments. The communication apparatus 1100 is configured to implement functions of the terminal or the base station in the method embodiment shown in FIG. 3, FIG. 5, FIG. 7, or FIG. 9.

When the communication apparatus 1100 is configured to implement the functions of the terminal device in the method embodiment shown in FIG. 3, the sending unit 1101 is configured to send capability information to a network device, where the capability information includes a plurality of first frequency band combinations, the first frequency band combination includes at least two frequency bands, the capability information indicates that a cell corresponding to a first frequency band included in the first frequency band combination supports being configured as a first cell, or the capability information indicates whether the cell corresponding to the first frequency band included in the first frequency band combination supports being configured as the first cell, and when the first cell is configured for the terminal device, the terminal device is incapable of using a downlink carrier of the first cell for communication; and the receiving unit 1102 is configured to receive radio resource control RRC signaling sent by the network device, where the RRC signaling indicates a second frequency band combination configured for the terminal device, the second frequency band combination includes the first cell, and the second frequency band combination is one of the plurality of first frequency band combinations.

In a possible implementation, that the capability information indicates that the cell corresponding to the first frequency band included in the first frequency band combination supports being configured as the first cell is specifically: The capability information indicates that the cell corresponding to the first frequency band supports being configured as one of the first cell and a second cell, and when the second cell is configured for the terminal device, the terminal device is capable of using a downlink carrier of the second cell for communication.

In a possible implementation, that the capability information indicates whether the cell corresponding to the first frequency band included in the first frequency band combination supports being configured as the first cell is specifically: The capability information indicates that the cell corresponding to the first frequency band included in the first frequency band combination supports being configured only as the first cell, or the cell corresponding to the first frequency band supports being configured only as a second cell, and when the second cell is configured for the terminal device, the terminal device is capable of using a downlink carrier of the second cell for communication.

In a possible implementation, the RRC signaling further includes cell configuration information, and the cell configuration information indicates one or more of the following information: synchronous timing information of the first cell, downlink control information DCI blind detection information, and a first cell index, where a cell corresponding to the first cell index belongs to the second cell.

In a possible implementation, the receiving unit 1102 is configured to receive, based on the DCI blind detection information by using a downlink carrier of the cell corresponding to the first cell index, DCI that is from the network device and that is used to schedule an uplink carrier of the first cell.

In a possible implementation, the cell configuration information indicates a second cell index and/or a timing offset between a cell corresponding to the second cell index and the first cell, or the cell configuration information indicates that the synchronous timing information of the first cell is the same as synchronous timing information of a primary cell, and the cell corresponding to the second cell index belongs to the second cell.

When the communication apparatus 1100 is configured to implement the functions of the network device in the method embodiment shown in FIG. 3, the receiving unit 1102 is configured receive capability information from a terminal device, where the capability information includes a plurality of first frequency band combinations, the first frequency band combination includes at least two frequency bands, the capability information indicates that a cell corresponding to a first frequency band included in the first frequency band combination supports being configured as a first cell, or the capability information indicates whether the cell corresponding to the first frequency band included in the first frequency band combination supports being configured as the first cell, and when the first cell is configured for the terminal device, the terminal device is incapable of using a downlink carrier of the first cell for communication; and the sending unit 1101 is configured to send radio resource control RRC signaling to the terminal device, where the RRC signaling indicates a second frequency band combination configured for the terminal device, the second frequency band combination includes the first cell, and the second frequency band combination is one of the plurality of first frequency band combinations.

In a possible implementation, that the capability information indicates that the cell corresponding to the first frequency band included in the first frequency band combination supports being configured as the first cell is specifically: The capability information indicates that the cell corresponding to the first frequency band included in the first frequency band combination supports being configured as one of the first cell and a second cell, and when the second cell is configured for the terminal device, the terminal device is capable of using a downlink carrier of the second cell for communication.

In a possible implementation, that the capability information indicates whether the cell corresponding to the first frequency band included in the first frequency band combination supports being configured as the first cell is specifically: The capability information indicates that the cell corresponding to the first frequency band supports being configured only as the first cell, or the cell corresponding to the first frequency band supports being configured only as a second cell, and when the second cell is configured for the terminal device, the terminal device is capable of using a downlink carrier of the second cell for communication.

In a possible implementation, the RRC signaling further includes cell configuration information, and the cell configuration information indicates one or more of the following information: synchronous timing information of the first cell, downlink control information DCI blind detection information, and a first cell index, where a cell corresponding to the first cell index belongs to the second cell. The sending unit 1101 is further configured to send, to the terminal device based on the DCI blind detection information by using a downlink carrier of the cell corresponding to the first cell index, DCI used to schedule an uplink carrier of the first cell.

In a possible implementation, the cell configuration information indicates a second cell index and/or a timing offset between a cell corresponding to the second cell index and the first cell, or the cell configuration information indicates that the synchronous timing information of the first cell is the same as synchronous timing information of a primary cell, and the cell corresponding to the second cell index belongs to the second cell.

For more detailed descriptions of the sending unit 1101 and the receiving unit 1102, refer to the corresponding related descriptions in the method embodiment shown in FIG. 3.

When the communication apparatus 1100 is configured to implement the functions of the terminal device in the method embodiment shown in FIG. 5, the sending unit 1101 is configured to send capability information to a network device, where the capability information indicates a plurality of frequency band groups, the frequency band group includes at least one frequency band, each of the plurality of frequency band groups supports half-duplex communication and/or full-duplex communication, a frequency band in a first frequency band group is different from a frequency band in a second frequency band group, a combination of the first frequency band group and the second frequency band group supports the full-duplex communication, the first frequency band group is one of the plurality of frequency band groups, and the second frequency band group is a frequency band group other than the first frequency band group in the plurality of frequency band groups; and the receiving unit 1102 is configured to receive downlink control information DCI from the network device, where the DCI indicates to send information on a first uplink carrier and/or indicates to receive information on a first downlink carrier, the first uplink carrier is a carrier in the first frequency band group, and the first downlink carrier is a carrier in the second frequency band group.

In a possible implementation, a frequency component of a distorted signal generated through aggregation of at least two carriers in the first frequency band group is different from a frequency component of a carrier in the second frequency band group.

When the communication apparatus 1100 is configured to implement the functions of the network device in the method embodiment shown in FIG. 5, the receiving unit 1102 is configured to receive capability information from a terminal device, where the capability information indicates a plurality of frequency band groups, the frequency band group includes at least one frequency band, each of the plurality of frequency band groups supports half-duplex communication and/or full-duplex communication, a frequency band in a first frequency band group is different from a frequency band in a second frequency band group, a combination of the first frequency band group and the second frequency band group supports the full-duplex communication, the first frequency band group is one of the plurality of frequency band groups, and the second frequency band group is a frequency band group other than the first frequency band group in the plurality of frequency band groups; and the sending unit 1101 is configured to send downlink control information DCI to the terminal device, where the DCI indicates the terminal device to send information on a first uplink carrier and/or indicates the terminal device to receive information on a first downlink carrier, the first uplink carrier is a carrier in the first frequency band group, and the first downlink carrier is a carrier in the second frequency band group.

In a possible implementation, a frequency component of a distorted signal generated through aggregation of at least two carriers in the first frequency band group is different from a frequency component of a carrier in the second frequency band group.

For more detailed descriptions of the sending unit 1101 and the receiving unit 1102, refer to the corresponding related descriptions in the method embodiment shown in FIG. 5.

When the communication apparatus 1100 is configured to implement the functions of the terminal device in the method embodiment shown in FIG. 7, the receiving unit 1102 is configured to receive first information sent by a network device, where the first information indicates to activate or deactivate a downlink carrier or an uplink carrier of a first secondary cell; and the receiving unit 1102 is further configured to receive, on a first downlink carrier, downlink data information or control information sent by the network device, where when the first information indicates to deactivate the downlink carrier of the first secondary cell, the first downlink carrier does not include the downlink carrier of the first secondary cell.

In a possible implementation, the receiving unit 1102 is further configured to receive radio resource control RRC signaling sent by the network device, where the RRC signaling indicates configuration information of the first secondary cell, the configuration information of the first secondary cell includes configuration information of a plurality of downlink bandwidth parts BWPs, the configuration information of the plurality of downlink BWPs includes configuration information of a first downlink BWP, and the configuration information of the first downlink BWP indicates to deactivate the downlink carrier of the first secondary cell on the first downlink BWP. That the first information indicates to deactivate the downlink carrier of the first secondary cell is specifically: The first information indicates to switch a downlink BWP of the first secondary cell to the first downlink BWP.

When the communication apparatus 1100 is configured to implement the functions of the network device in the method embodiment shown in FIG. 7, the sending unit 1101 is configured to send first information to a terminal device, where the first information indicates to activate or deactivate a downlink carrier or an uplink carrier of a first secondary cell; and the sending unit 1101 is further configured to send, by using a first downlink carrier, downlink data information or control information to the terminal device, where when the first information indicates to deactivate the downlink carrier of the first secondary cell, the first downlink carrier does not include the downlink carrier of the first secondary cell.

In a possible implementation, the sending unit 1101 is further configured to send radio resource control RRC signaling to the terminal device, where the RRC signaling indicates configuration information of the first secondary cell, the configuration information of the first secondary cell includes configuration information of a plurality of downlink bandwidth parts BWPs, the configuration information of the plurality of downlink BWPs includes configuration information of a first downlink BWP, and the configuration information of the first downlink BWP indicates to deactivate the downlink carrier of the first secondary cell on the first downlink BWP. That the first information indicates to deactivate the downlink carrier of the first secondary cell is specifically: The first information indicates to switch a downlink BWP of the first secondary cell to the first downlink BWP.

For more detailed descriptions of the sending unit 1101 and the receiving unit 1102, refer to the corresponding related descriptions in the method embodiment shown in FIG. 7.

When the communication apparatus 1100 is configured to implement the functions of the terminal device in the method embodiment shown in FIG. 9, the sending unit 1101 is configured to send capability information to a network device, where the capability information indicates a first frequency band combination, the first frequency band combination corresponds to at least one operating mode, the operating mode includes an uplink carrier corresponding to a first frequency band and/or a downlink carrier corresponding to a second frequency band, and the first frequency band and the second frequency band each are a frequency band in the first frequency band combination; the receiving unit 1102 is configured to receive first information sent by the network device, where the first information indicates a first operating mode, and the first operating mode is one of a plurality of operating modes; and the receiving unit 1102 is further configured to receive downlink control information DCI sent by the network device, where the DCI indicates the terminal device to send information on a first uplink carrier and/or indicates the terminal to receive information on a first downlink carrier, the first uplink carrier belongs to the uplink carrier corresponding to the first frequency band in the first operating mode, and the first downlink carrier belongs to the downlink carrier corresponding to the second frequency band in the first operating mode.

In a possible implementation, the at least one operating mode is predefined based on the first frequency band combination.

In a possible implementation, the capability information includes the at least one operating mode.

In a possible implementation, the receiving unit 1102 is further configured to receive radio resource control RRC signaling sent by the network device, where the RRC signaling indicates the at least one operating mode.

In a possible implementation, a frequency component of a distorted signal generated through aggregation of at least two uplink carriers corresponding to the first frequency band is different from a frequency component of the downlink carrier corresponding to the second frequency band.

When the communication apparatus 1100 is configured to implement the functions of the network device in the method embodiment shown in FIG. 9, the receiving unit 1102 is configured to receive capability information sent by a terminal device, where the capability information indicates a first frequency band combination, the first frequency band combination includes at least two frequency bands, the capability information indicates a plurality of operating modes in the first frequency band combination, the operating mode includes an uplink carrier corresponding to a first frequency band and/or a downlink carrier corresponding to a second frequency band, and the first frequency band and the second frequency band each are a frequency band in the first frequency band combination; the sending unit 1101 is configured to send first information to the terminal device, where the first information indicates a first operating mode, and the first operating mode is one of the plurality of operating modes; and the sending unit 1101 is further configured to send downlink control information DCI to the terminal device, where the DCI indicates the terminal device to send information on a first uplink carrier and/or indicates the terminal to receive information on a first downlink carrier, the first uplink carrier belongs to the uplink carrier corresponding to the first frequency band in the first operating mode, and the first downlink carrier belongs to the downlink carrier corresponding to the second frequency band in the first operating mode.

In a possible implementation, the at least one operating mode is predefined based on the first frequency band combination.

In a possible implementation, the capability information includes the at least one operating mode.

In a possible implementation, the communication apparatus 1100 further includes a processing unit. The processing unit is configured to determine one or more operating modes based on the first frequency band combination. The sending unit 1101 is further configured to send radio resource control RRC signaling to the terminal device, where the RRC signaling indicates the at least one operating mode.

In a possible implementation, a frequency component of a distorted signal generated through aggregation of at least two uplink carriers corresponding to the first frequency band is different from a frequency component of the downlink carrier corresponding to the second frequency band.

For more detailed descriptions of the sending unit 1101 and the receiving unit 1102, refer to the corresponding related descriptions in the method embodiment shown in FIG. 9.

As shown in FIG. 12, the communication apparatus 1200 includes one or more processors 1201, and may further include one or more memories 1202. Instructions 1204 may be stored in the one or more memories 1202. The instructions may be run on the processor 1201, to enable the communication apparatus 1200 to perform the method described in the foregoing method embodiments. Optionally, the memory 1202 may further store data. The processor 1201 and the memory 1202 may be separately disposed, or may be integrated together.

Optionally, the communication apparatus 1200 may further include a transceiver 1207 and an antenna 1206. The transceiver 1207 may be referred to as a transceiver unit, a transceiver machine, a transceiver circuit, or the like, and is configured to implement a transceiver function. The transceiver 1207 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

In another possible design, optionally, the processor 1201 may store instructions 1203. When the instructions 1203 are run on the processor 1201, the communication apparatus 1200 is enabled to perform the methods described in the foregoing method embodiments. The instructions 1203 may be fixed in the processor 1201.

In another possible design, the communication apparatus 1200 may include a circuit. The circuit may implement a sending, receiving, or communication function in the foregoing method embodiments.

When the communication apparatus may be a chip or a chip system, refer to a diagram of a structure of a chip in FIG. 13. The chip shown in FIG. 13 includes a processor 1301 and an interface 1302. Optionally, the chip may further include a memory 1303. There may be one or more processors 1301, and there may be a plurality of interfaces 1302.

When the chip is configured to implement functions of the network device or the terminal device in embodiments of this application, the processor 1301 is configured to perform a data processing operation of the network device in embodiments of this application. The interface 1302 is configured to receive or output a signal.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

When the foregoing communication apparatus is a module used in a base station, the module in the base station implements a function of the base station in the foregoing method embodiment. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or a terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending, by a terminal device, capability information to a network device, wherein the capability information comprises a plurality of first frequency band combinations, the first frequency band combination comprises at least two frequency bands, the capability information indicates that a cell corresponding to a first frequency band comprised in the first frequency band combination supports being configured as a first cell, or the capability information indicates whether the cell corresponding to the first frequency band comprised in the first frequency band combination supports being configured as the first cell, and when the first cell is configured for the terminal device, the terminal device is incapable of using a downlink carrier of the first cell for communication; and
receiving, by the terminal device, radio resource control RRC signaling sent by the network device, wherein the RRC signaling indicates a second frequency band combination configured for the terminal device, the second frequency band combination comprises the first cell, and the second frequency band combination is one of the plurality of first frequency band combinations.

2. The method according to claim 1, wherein that the capability information indicates that the cell corresponding to the first frequency band comprised in the first frequency band combination supports being configured as the first cell comprises: the capability information indicates that the cell corresponding to the first frequency band supports being configured as one of the first cell and a second cell, and when the second cell is configured for the terminal device, the terminal device is capable of using a downlink carrier of the second cell for communication.

3. The method according to claim 1, wherein that the capability information indicates whether the cell corresponding to the first frequency band comprised in the first frequency band combination supports being configured as the first cell comprises: the capability information indicates that the cell corresponding to the first frequency band comprised in the first frequency band combination supports being configured only as the first cell, or the cell corresponding to the first frequency band supports being configured only as a second cell, and when the second cell is configured for the terminal device, the terminal device is capable of using a downlink carrier of the second cell for communication.

4. The method according to any one of claims 1 to 3, wherein the RRC signaling further comprises cell configuration information, and the cell configuration information indicates one or more of the following information: synchronous timing information of the first cell, downlink control information DCI blind detection information, and a first cell index, wherein a cell corresponding to the first cell index belongs to the second cell; and
the method further comprises:
receiving, by the terminal device based on the DCI blind detection information by using a downlink carrier of the cell corresponding to the first cell index, DCI that is from the network device and that is used to schedule an uplink carrier of the first cell.

5. The method according to claim 4, wherein the cell configuration information indicates a second cell index and/or a timing offset between a cell corresponding to the second cell index and the first cell, or the cell configuration information indicates that the synchronous timing information of the first cell is the same as synchronous timing information of a primary cell, and the cell corresponding to the second cell index belongs to the second cell.

6. A communication method, wherein the method comprises:
receiving, by a network device, capability information from a terminal device, wherein the capability information comprises a plurality of first frequency band combinations, the first frequency band combination comprises at least two frequency bands, the capability information indicates that a cell corresponding to a first frequency band comprised in the first frequency band combination supports being configured as a first cell, or the capability information indicates whether the cell corresponding to the first frequency band comprised in the first frequency band combination supports being configured as the first cell, and when the first cell is configured for the terminal device, the terminal device is incapable of using a downlink carrier of the first cell for communication; and
sending, by the network device, radio resource control RRC signaling to the terminal device, wherein the RRC signaling indicates a second frequency band combination configured for the terminal device, the second frequency band combination comprises the first cell, and the second frequency band combination is one of the plurality of first frequency band combinations.

7. The method according to claim 6, wherein that the capability information indicates that the cell corresponding to the first frequency band comprised in the first frequency band combination supports being configured as the first cell comprises: the capability information indicates that the cell corresponding to the first frequency band comprised in the first frequency band combination supports being configured as one of the first cell and a second cell, and when the second cell is configured for the terminal device, the terminal device is capable of using a downlink carrier of the second cell for communication.

8. The method according to claim 6, wherein that the capability information indicates whether the cell corresponding to the first frequency band comprised in the first frequency band combination supports being configured as the first cell comprises: the capability information indicates that the cell corresponding to the first frequency band supports being configured only as the first cell, or the cell corresponding to the first frequency band supports being configured only as a second cell, and when the second cell is configured for the terminal device, the terminal device is capable of using a downlink carrier of the second cell for communication.

9. The method according to any one of claims 6 to 8, wherein the RRC signaling further comprises cell configuration information, and the cell configuration information indicates one or more of the following information: synchronous timing information of the first cell, downlink control information DCI blind detection information, and a first cell index, wherein a cell corresponding to the first cell index belongs to the second cell; and
the method further comprises:
sending, by the network device to the terminal device based on the DCI blind detection information by using a downlink carrier of the cell corresponding to the first cell index, DCI used to schedule an uplink carrier of the first cell.

10. The method according to claim 9, wherein the cell configuration information indicates a second cell index and/or a timing offset between a cell corresponding to the second cell index and the first cell, or the cell configuration information indicates that the synchronous timing information of the first cell is the same as synchronous timing information of a primary cell, and the cell corresponding to the second cell index belongs to the second cell.

11. A communication apparatus, wherein the communication apparatus comprises a processor, and when the processor executes a computer program in a memory, the method according to any one of claims 1 to 10 is performed.

12. A chip, comprising a processor and a communication interface, wherein
the communication interface is configured to receive or output a signal; and
the processor is configured to run a program, to enable the chip to implement the method according to any one of claims 1 to 10.

13. A computer-readable storage medium, wherein the computer-readable storage medium stores a computer program, and when the computer program is run on a communication apparatus, the communication apparatus is enabled to perform the method according to any one of claims 1 to 10.
